(19) Europäisches Patentamt
European Patent Office
Office européen des brevets

(11) EP 1 202 625 B1

(12) # FASCICULE DE BREVET EUROPEEN

(45) Date de publication et mention de la délivrance du brevet:
**15.10.2003 Bulletin 2003/42**

(21) Numéro de dépôt: **00956642.3**

(22) Date de dépôt: **08.08.2000**

(51) Int Cl.[7]: **A01N 33/12**, A01N 57/34

(86) Numéro de dépôt international:
**PCT/FR00/02276**

(87) Numéro de publication internationale:
**WO 01/010213 (15.02.2001 Gazette 2001/07)**

(54) **UTILISATION D'UN POLYMERE HYDROSOLUBLE DANS UNE COMPOSITION BIOCIDE POUR LE TRAITEMENT DES SURFACES DURES**

VERWENDUNG EINES WASSERLÖSLICHEN POLYMERS IN EINER BIOCIDEN ZUSAMMENSETZUNG ZUR BEHANDLUNG VON HARTER OBERFLÄCHE

USE OF A WATER SOLUBLE POLYMER IN A BIOCIDAL COMPOSITION FOR TREATING HARD SURFACES

(84) Etats contractants désignés:
**AT BE CH CY DE DK ES FI FR GB GR IE IT LI LU MC NL PT SE**

(30) Priorité: **09.08.1999 FR 9910329**

(43) Date de publication de la demande:
**08.05.2002 Bulletin 2002/19**

(73) Titulaires:
- **RHODIA CHIMIE**
  **92512 Boulogne Billancourt Cedex (FR)**
- **Ventura, Mark Edward**
  **Freehold, NJ 07728 (US)**
- **Gresser, Robert**
  **78540 Vernouillet (FR)**

(72) Inventeurs:
- **AUBAY, Eric**
  **F-94170 Le Perreux-sur-Marne (FR)**
- **YEUNG, Dominic**
  **Mississauga, Ontario L4Y 3J2 (CA)**
- **GABRIEL, Gladys, Saliba**
  **Alamo, CA 94507 (US)**

(74) Mandataire: **Fabre, Madeleine-France et al**
**Rhodia Services,**
**Direction de la Propriété Industrielle,**
**40, rue de la Haie-Coq**
**93306 Aubervilliers Cedex (FR)**

(56) Documents cités:

| | |
|---|---|
| EP-A- 0 602 254 | WO-A-97/20908 |
| WO-A-98/44791 | US-A- 5 158 766 |

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 1 202 625 B1

## Description

La présente invention a pour objet le traitement de surfaces dures industrielles, domestiques ou de collectivité, notamment de type céramique, carrelage ou vitres visant à conférer à celles-ci des propriétés biocides.

L'invention a plus particulièrement pour objet l'utilisation d'un polymère hydrosoluble dans une composition biocide aqueuse, notamment dans une composition nettoyante biocide aqueuse, pour améliorer les propriétés biocides de celles-ci, en augmentant l'adhérence du biocide à la surface traitée. Elle a également pour objet l'utilisation, dans une composition biocide aqueuse comprenant un biocide cationique pour le traitement des surfaces dures, dudit polymère hydrosoluble en tant qu'agent de vectorisation et/ou de libération contrôlée dudit biocide sur la surface dure à traiter.

Les formulations nettoyantes biocides aqueuses actuellement disponibles comprennent généralement essentiellement un composé biocide de nature cationique et un agent tensioactif.

Elles ne donnent pas toutefois des résultats entièrement satisfaisants pour les raisons suivantes :

- l'interaction du biocide avec la surface traitée est faible et ne permet pas une bonne adhérence ou adsorption de celui-ci ; des quantités importantes de composé biocide sont de ce fait nécessaires pour conférer à la surface une activité biocide réelle et durable ;
- le rinçage de la surface dure après l'application de la formulation biocide conduit à une désorption du biocide cationique entraînant une perte des propriétés biocides de la surface ;
- du fait de la nature hydrophobe des biocides cationiques, leur application sur des surfaces dures a pour conséquence de conférer à celles-ci un caractère hydrophobe avec, pour conséquence, de diminuer fortement les performances de nettoyage des formulations nettoyantes, en particulier dans le cas des salissures grasses.

Pour remédier à ces problèmes, il a été proposé d'ajouter aux formulations nettoyantes biocides des composés polymères dans le but d'améliorer l'efficacité biocide de ces formulations.

Ainsi, FR 2 769 469 propose d'associer un silicone polyéther à un biocide cationique dans une formulations de nettoyage de surfaces dures.

GB-2 324 467 décrit l'addition d'un polymère cationique à un biocide cationique pour résoudre les problèmes sus-mentionnés.

US-A-5,049,383 décrit des dispersions aqueuses cationiques comprenant un agent tensioactif cationique biocide et de fines particules d'un copolymère comprenant au moins 80% en poids d'unités dérivées d'un monomère non-ionique éthyléniquement insaturé, pour le traitement antimicrobien, antifongique et algicide du bois, des films de peinture ... .

US-A-5,158,766 et WO-A-98/44791 décrivent des compositions antimicrobiennes filmogènes pour le traitement des surfaces dures, comprenant un composé ammonium quaternaire antimicrobien et un polymère anionique acide.

WO-A-97/20908 décrit l'utilisation de polymères ou copolymères dérivés de monomères cationiques et éventuellement de monomères anioniques pour le traitement anti-salissure des surfaces dures (« soil release »).

Un premier but de l'invention est donc d'améliorer encore l'activité biocide de compositions nettoyantes pour surfaces dures.

Un autre but de l'invention est d'améliorer l'adsorption de substances biocides cationiques sur des surfaces dures, notamment de substances biocides contenues dans des compositions nettoyantes aqueuses.

Un autre but encore de l'invention est de fournir des compositions nettoyantes biocides aqueuses pour surfaces dures dans lesquelles la quantité de composé(s) biocide(s) cationique(s) est réduite par rapport aux compositions existantes, et qui ont une efficacité au moins égale aux compositions connues.

Grâce l'invention, ces buts sont atteints par la mise en oeuvre dans des compositions biocides aqueuses d'un polymère amphotère hydrosoluble tel que décrit ci-après. En lui-même ledit polymère ne possède généralement pas d'activité biocide.

L'invention a pour objet l'utilisation d'au moins un polymère hydrosoluble amphotère, obtenu par copolymérisation :

- d'au moins un monomère (a) à insaturation éthylénique possédant un groupe susceptible de se protoner dans le milieu d'application avec
- au moins un monomère à insaturation éthylénique (b) portant une fonction à caractère acide copoiymérisable avec (a) et susceptible de s'ioniser négativement dans le milieu d'application ; et
- éventuellement au moins un monomère à insaturation éthylénique (c) de charge neutre, de préférence portant un ou plusieurs groupes hydrophiles, copolymérisables avec (a) et (b) ;

pour améliorer l'efficacité biocide de compositions biocides aqueuses comprenant un composé biocide cationique.

Le monomère (a) comprend avantageusement au moins un groupe ammonium quaternaire.

Le monomère (a) est de préférence choisi parmi les composés de formules générales I à III suivantes :

*formule I :*

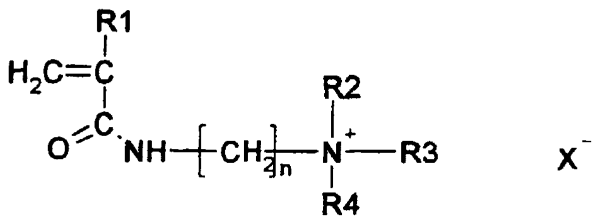

dans laquelle

- $R_1$ est un atome d'hydrogène ou un groupe méthyle, de préférence un groupe méthyle,
- $R_2$, $R_3$ et $R_4$ sont des groupes alkyle linéaire ou ramifié en $C_1$-$C_4$,
- n représente un nombre entier de 1 à 4, notamment le nombre 3,
- X représente un contre-ion compatible avec le caractère hydrosoluble du polymère.

*formule II :*

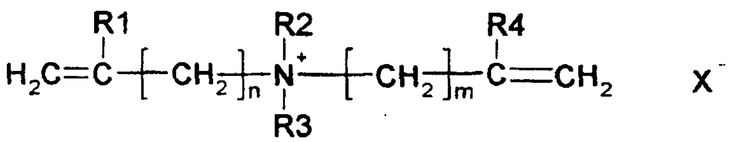

dans laquelle :

- $R_1$ et $R_4$ représentent indépendamment l'un de l'autre un atome d'hydrogène ou un groupe alkyle en $C_1$-$C_6$ linéaire ou ramifié,
- $R_2$ et $R_3$ représentent indépendamment l'un de l'autre un groupe alkyle, hydroxyalkyle, ou aminoalkyle dans lesquelles le groupe alkyle est une chaîne en $C_1$-$C_6$, linéaire ou ramifiée, de préférence un groupe méthyle,
- n et m sont des nombres entiers compris entre 1 et 3,
- X représente un contre-ion compatible avec le caractère hydrosoluble du polymère.

*formule III :*

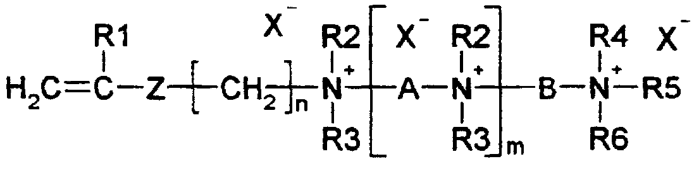

dans laquelle

- $R_1$ est un atome d'hydrogène, un groupe méthyle ou éthyle,
- $R_2$, $R_3$, $R_4$, $R_5$, $R_6$ identiques ou différents sont des groupes alkyle, hydroxyalkyle ou aminoalkyle, linéaire ou

ramifié en $C_1$-$C_6$, de préférence en $C_1$-$C_4$.

- m est un nombre entier de 0 à 10, de préférence de 0 à 2,
- n est un nombre entier de 1 à 6, de préférence 2 à 4,
- Z représente un groupe -C(O)O-, -C(O)NH- ou un atome d'oxygène,
- A représente un groupe $(CH_2)_p$, p étant un nombre entier de 1 à 6, de préférence de 2 à 4,
- B représente une chaîne polyméthylène linéaire ou ramifiée en $C_2$-$C_{12}$, avantageusement $C_3$-$C_6$, éventuellement interrompue par un ou plusieurs hétéroatomes ou hétérogroupes, notamment O ou NH, et éventuellement substituée par un ou plusieurs groupes hydroxyles ou amino, de préférence hydroxyles,
- X identiques ou différents représentent des contre-ions compatibles avec le caractère hydrosoluble du polymère.

Comme monomère (a) de formule générale I, on préfère celui représenté par la formule suivante :

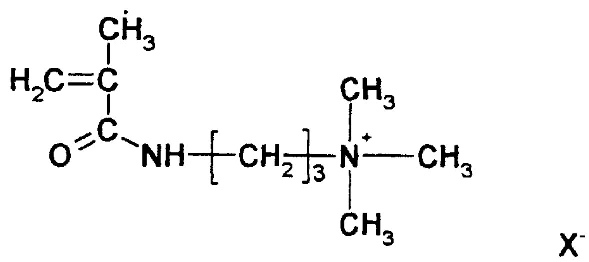

dans lequel le contre-ion est un chlorure (MAPTAC).

Comme monomère (a) de formule générale II, on préfère celui représenté par la formule suivante :

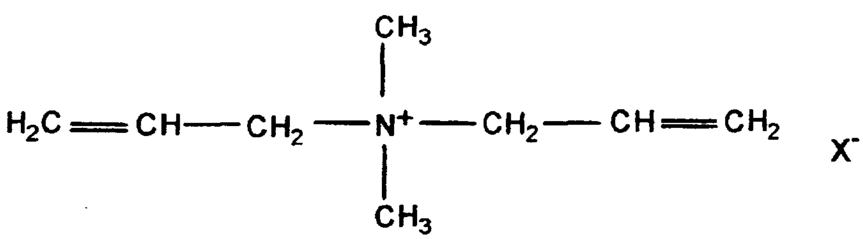

dans laquelle X est un chlorure (DADMAC).

Dans la formule générale III, on préfère que soient remplies les conditions suivantes :

- Z représente C(O)O, C(O)NH ou O, tout préférentiellement C(O)NH ;
- n est égal à 2 ou 3, tout particulièrement 3 ;
- m va de 0 à 2, de préférence est égal à 0 ou 1, tout particulièrement à 0 ;
- B représente

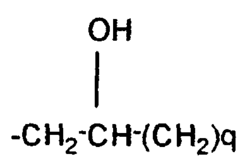

avec q de 1 à 4, de préférence égal à 1 ;

- $R_1$ à $R_6$ identiques ou différents représentent un groupe méthyle ou éthyle.

Des monomères (a) préférés de ce type sont ceux de formule suivante:

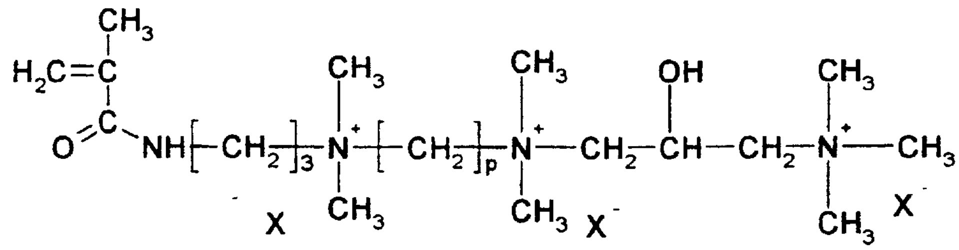

p = 2 à 4,
et plus particulièrement le monomère

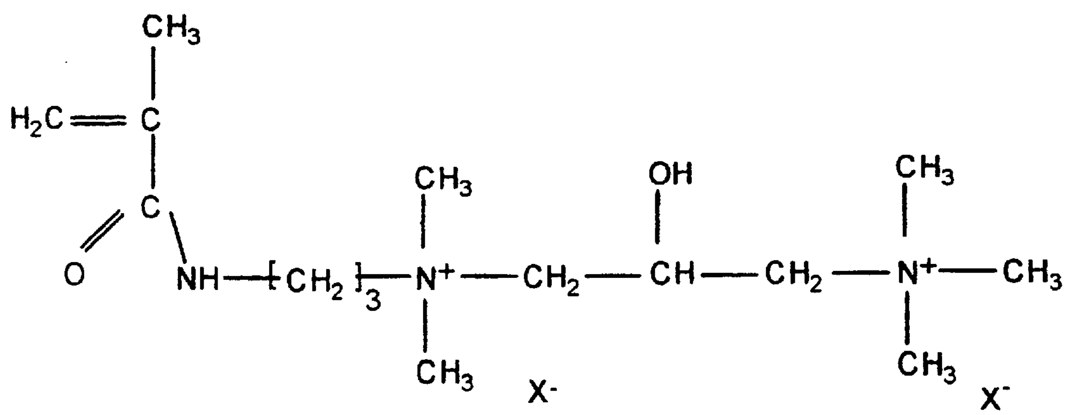

$X^-$ représentant l'ion chlorure (DIQUAT).

Avantageusement, (b) est choisi parmi les acides carboxyliques, sulfoniques, sulfuriques, phosphoniques et phosphoriques en $C_3$-$C_8$ à insaturation monoéthylénique.

De manière préférée, le monomère (b) est choisi parmi l'acide acrylique, l'acide méthacrylique, l'acide α-éthacrylique, l'acide β,β-diméthylacrylique, l'acide méthylènemalonique, l'acide vinylacétique, l'acide allylacétique, l'acide éthylidineacétique, l'acide propylidineacétique, l'acide crotonique, l'acide maléique, l'acide fumarique, l'acide itaconique, l'acide citraconique, l'acide mésaconique, la N-méthacroyl-alanine, la N-acryloyl-hydroxy-glycine, l'acrylate de sulfopropyle, l'acrylate de sutfoéthyle, le méthacrylate de sulfoéthyle, l'acide styrène sulfonique, l'acide vinyl sulfonique, l'acide vinylphosphonique, l'acrylate de phosphoéthyle, l'acrylate de phophonoéthyle, l'acrylate de phosphopropyle, l'acrylate de phophonopropyle, le méthacrylate de phosphoéthyle, le méthacrylate de phophonoéthyle, le méthacrylate de phosphopropyle, le méthacrylate de phophonopropyle, et les sels de métal alcalin et d'ammonium de ceux-ci.

Avantageusement, le monomère (c) est choisi parmi l'acrylamide, l'alcool vinylique, les esters d'alkyle en $C_1$-$C_4$ de l'acide acrylique et de l'acide méthacrylique, les esters d'hydroxyalkyle en $C_1$-$C_4$ de l'acide acrylique et de l'acide méthacrylique, notamment l'acrylate et le méthacrylate d'éthylène glycol et de propylène glycol, les esters polyalkoxylés de l'acide acrylique et de l'acide méthacrylique, notamment les esters de polyéthylène glycol et de polypropylène glycol, les esters de l'acide acrylique ou de l'acide méthacrylique et de polyéthylène glycol ou polypropylène glycol mono $C_1$-$C_{25}$ alkyl éthers, l'acétate de vinyle, la vinylpyrrolidone, le méthylvinyléther.

Dans les formules I, II et III ci-dessus, X est avantageusement choisi parmi les anions d'halogène, notamment de chlore, sulfonate, sulfate, hydrogénosulfate, phosphate, phosphanate, citrate, formiate et acétate.

De manière générale, le taux de monomère (a) est avantageusement compris entre 3 et 80% molaire, de préférence 10 à 70% molaire. Le taux de monomères (b) est avantageusement compris entre 10 et 95% molaire, de préférence 20 à 80% molaire. Le taux de monomères (c) est avantageusement compris entre 0 et 50% molaire, de préférence 0 et 30%, tout particulièrement de 5 à 25% molaire, ce taux étant tel que le polymère formé soit soluble dans le milieu aqueux d'application.

Le rapport molaire de monomère cationique au monomère anionique (a)/(b) est avantageusement compris entre 80/20 et 5/95, de préférence entre 75/25 et 20/80.

La masse moléculaire du polymère hydrosoluble selon l'invention est d'au moins 1 000, avantageusement d'au moins 10 000 et d'au plus 20 000 000, avantageusement d'au plus 10 000 000.

Sauf indications contraires, lorsqu'on parlera de masse moléculaire, il s'agira de la masse moléculaire en poids, exprimée en g/mol. Celle-ci peut être déterminée par chromatographie de perméation de gel aqueux (GPC) ou mesure de la viscosité intrinsèque dans une solution 1 N de $NaNO_3$ à 30°C.

Le copolymère est de préférence statistique.

Les monomères de formules générales I et II sont connus ou peuvent être préparés aisément à l'aide de procédés bien connus dans la technique.

Le monomère de formule générale III peut être préparé par exemple selon les schémas réactionnels suivants :

*- schéma réactionnel n° 1 :*

**(lorsque m est égal à 0)**

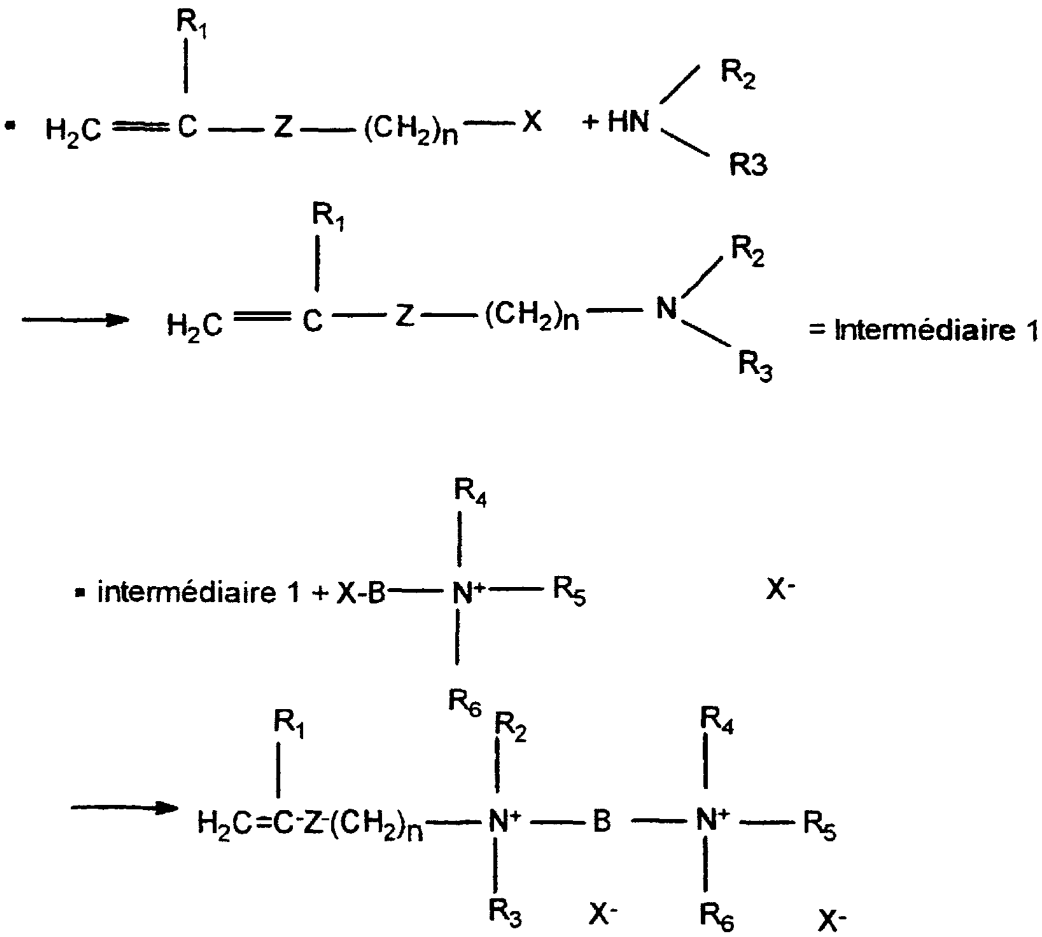

*schéma réactionnel n° 2 :*

(lorsque m est égal à 1)

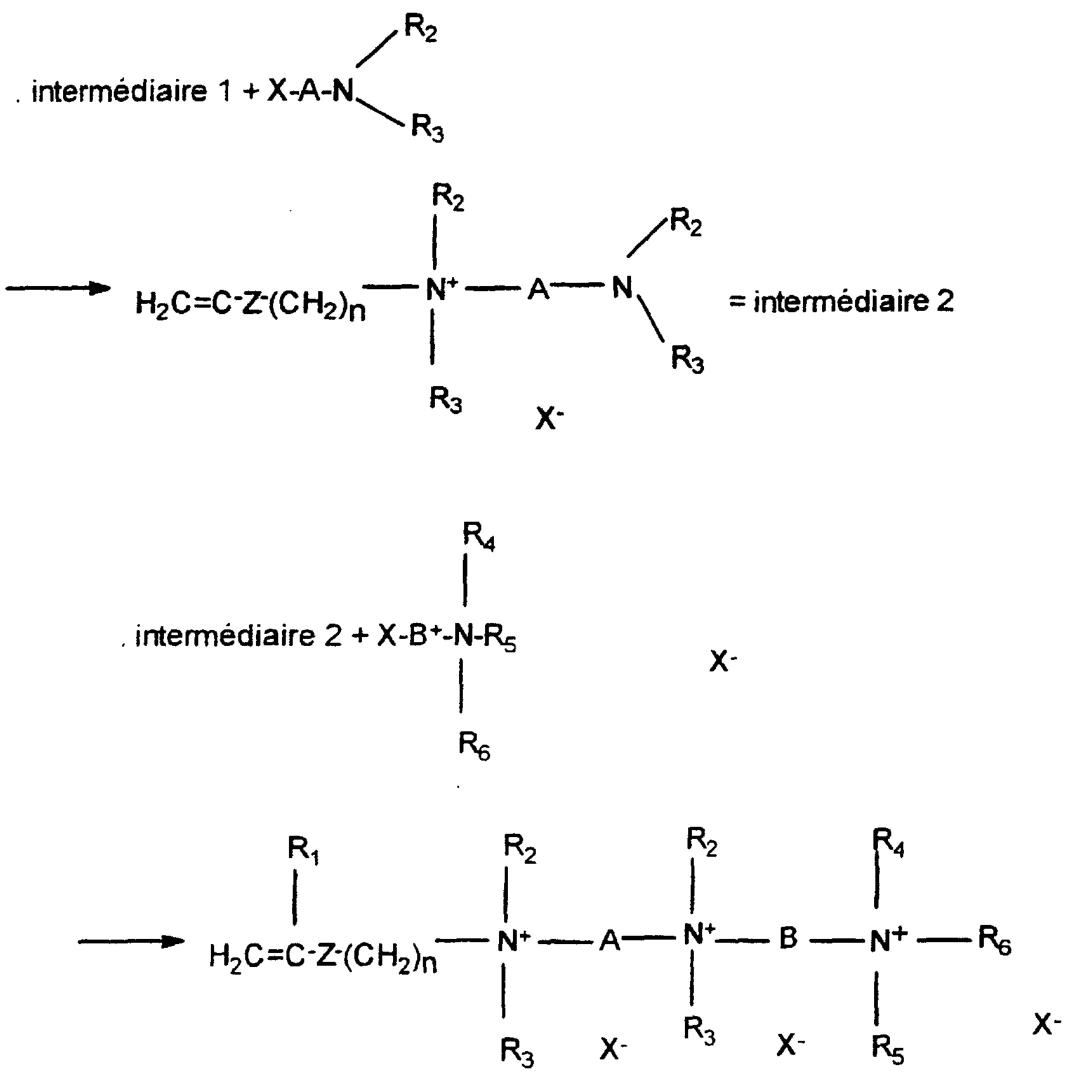


*schéma réactionnel n° 3 :*

(lorsque m est compris entre 2 et 10)

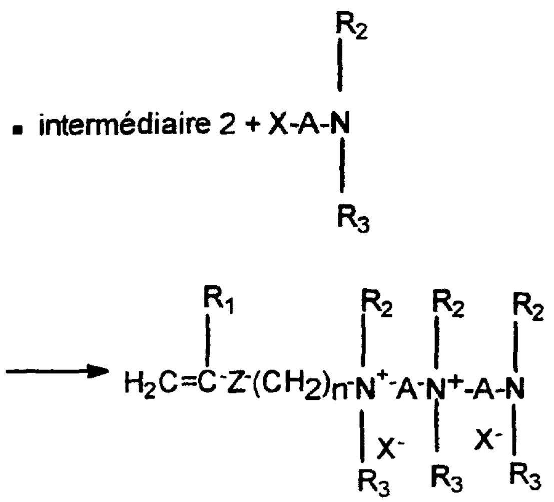


=intermédiaire 3

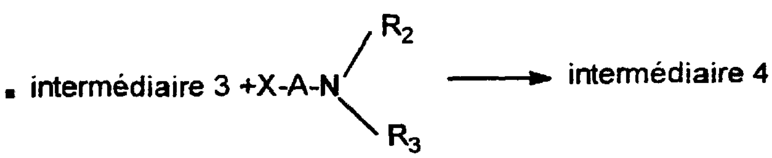


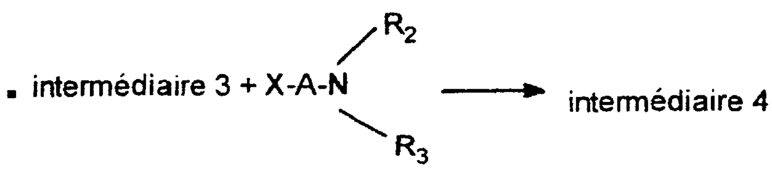


- ... .. etc...... → intermédiaire m+1

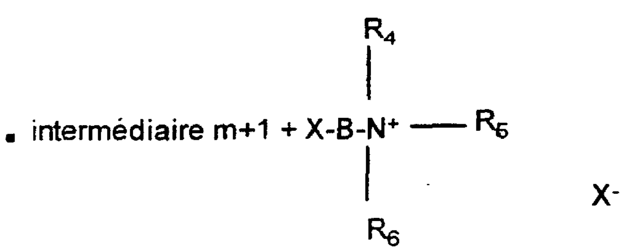


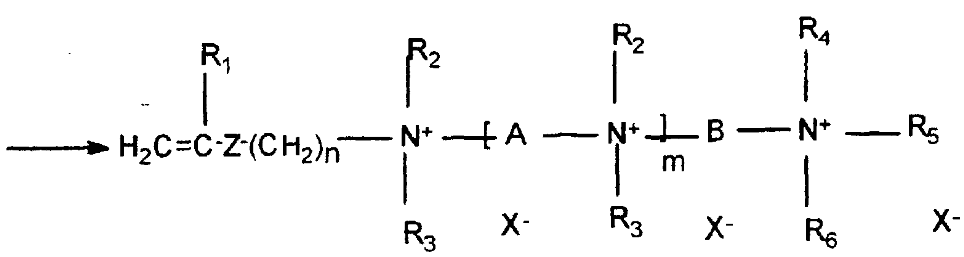

Les copolymères de l'invention peuvent être obtenus selon les techniques connues de préparation des copolymères, notamment par polymérisation par voie radicalaire des monomères de départ éthyléniquement insaturés qui sont des composés connus ou pouvant être facilement obtenus par l'homme du métier en mettant en oeuvre des procédés de synthèse classique de chimie organique.

On pourra notamment se référer aux procédés décrits dans US 4 387 017 et EP 156 646.

La polymérisation radicalaire est de préférence conduite dans un environnement exempt d'oxygène, par exemple en présence d'un gaz inerte (hélium, argon, etc) ou d'azote. La réaction est effectuée dans un solvant inerte, de préférence le méthanol ou l'éthanol, et de façon plus préférée dans l'eau.

La polymérisation est initiée par addition d'un initiateur de polymérisation. Les initiateurs utilisés sont les initiateurs de radicaux libres habituellement utilisés dans la technique. Des exemples comprennent les peresters organiques (t-butylpéroxypivalate, t-amylpéroxypivalate, t-butylpéroxy-α-éthylhexanoate, etc) ; des composés organiques de type azo, par exemple le chlorhydrate d'azo-bis-amidino-propane, l'azo-bis-isobutyronitrile, l'azo-bis-2,4-diméthylvaléronitrile, etc) ; les peroxydes inorganiques et organiques, par exemple le peroxyde d'hydrogène, le peroxyde de benzyle et le peroxyde de butyle, etc ; des systèmes d'initiateurs redox, par exemple ceux comprenant des agents oxydants, tels que les persulfates (notamment les persutfates d'ammonium ou de métaux alcalins, etc) ; les chlorates et les bromates (y compris les chlorates et/ou les bromates inorganiques ou organiques) ; les agents réducteurs tels que les sulfites et bisulfites (y compris les sulfites ou bisulfites inorganiques et/ou organiques) ; l'acide oxalique et l'acide ascorbique ainsi que les mélanges de deux ou plusieurs de ces composés.

Les initiateurs préférés sont des initiateurs solubles dans l'eau. On préfère en particulier le persulfate de sodium et le chlorhydate d'azo-bis-amidinopropane.

En variante, la polymérisation peut être initiée par irradiation à l'aide de lumière ultraviolette. La quantité d'initiateurs utilisés est en général, une quantité suffisante pourra réaliser l'initiation de la polymérisation. De préférence, les initiateurs sont présents en une quantité allant de 0,001 à environ 10% en poids par rapport au poids total des monomères, et de préférence sont compris en une quantité inférieure à 0,5% en poids par rapport au poids total des monomères, une quantité préférée étant située dans la plage de 0,005 à 0,5% en poids par rapport au poids total des monomères. L'initiateur est ajouté au mélange de polymérisation, soit de manière continue soit de manière discontinue.

Lorsque l'on veut obtenir des copolymères de masse moléculaire élevée, il est souhaitable de rajouter de l'initiateur frais pendant la réaction de polymérisation. L'addition graduelle ou discontinue permet également une polymérisation plus efficace et un temps de réaction moins long. La polymérisation est réalisée dans des conditions réactionnelles efficaces pour polymériser les monomères (a), les monomères (b) et éventuellement les monomères (c) en atmosphère exempte d'oxygène. De préférence, la réaction est conduite à une température allant d'environ 30°C à environ 100°C et de préférence entre 60°C et 90°C. L'atmosphère exempte d'oxygène est maintenue pendant toute la durée de la réaction, par exemple par maintien d'une purge d'azote tout au long de la réaction.

Des copolymères hydrosolubles amphotères préférées sont les suivants :

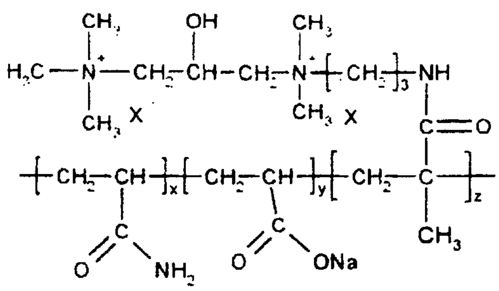

dérivé de DIQUAT. d'acide acrylique (sel de sodium) et d'acrylamide ;

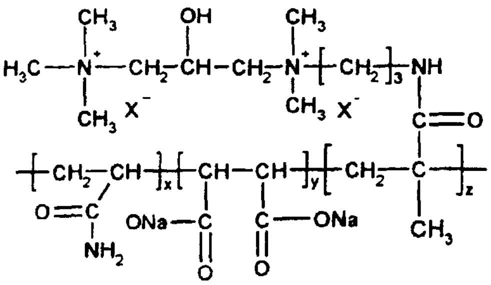

dérivé de DIQUAT, d'acide maléique (sel de sodium) et d'acrylamide ;

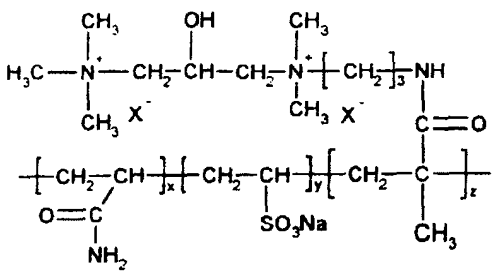

dérivé de DIQUAT, d'acide vinyl sulfonique (sel de sodium) et d'acrylamide ;

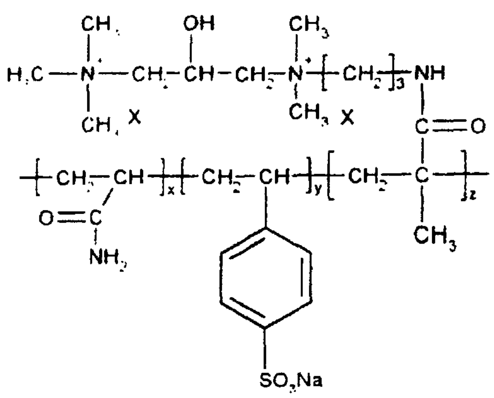

dérivé de DIQUAT, d'acide styrène sutfonique (sel de sodium) et d'acrylamide ;

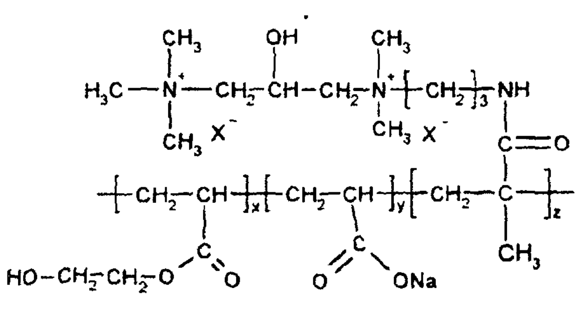

dérivé de DIQUAT, d'acide acrylique (sel de sodium) et d'acrylate d'hydroxyéthyle ;

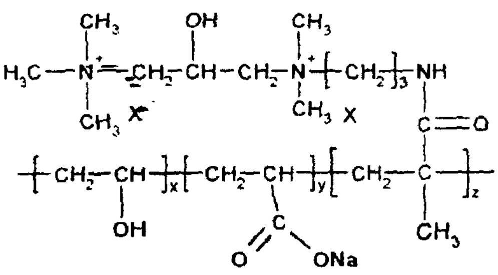

dérivé de DIQUAT, d'acide acrylique (sel de sodium) et d'alcool vinylique;

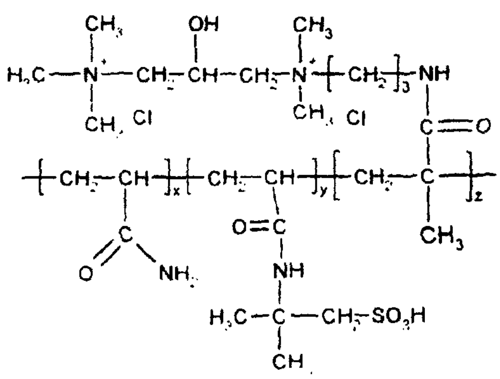

dérivé de DIQUAT, de N-(1-sulfo-2-isobutyl)acrylamide et d'acrylamide ;

x ayant une valeur moyenne de 0 à 50%, de préférence de 0 à 30%, tout particulièrement de 5 à 25%,

y ayant une valeur moyenne de 10 à 95%, de préférence de 20 à 70%,

z ayant une valeur moyenne de 3 à 80%, de préférence de 10 à 60%,

et le rapport y/z étant de manière préférée de l'ordre de 4/1 à 1/3, avec x+y+z = 100%, x, y et z représentant les % molaires de chaque motif dérivé de chacun des monomères (c), (b) et (a)

et

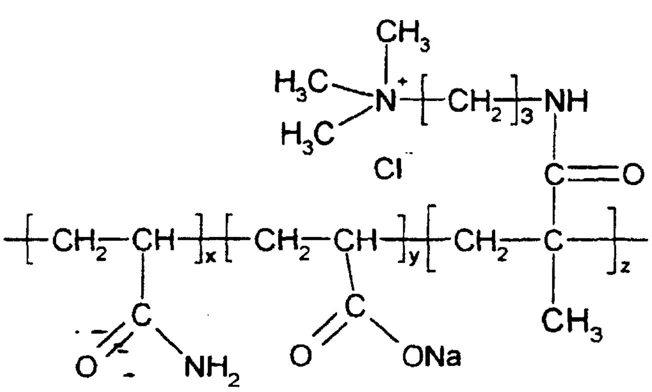

dérivé de MAPTAC, d'acide acrylique (sel de sodium) et d'acrylamide ; avec x+y+z = 100%, x, y et z représentant les % molaires de chaque motif dérivé de chacun des monomères (c), (b) et (a)

y/z = 25/75 à 70/30

et x ayant une valeur moyenne de 0 à 40%, de préférence de 10 à 30%,

On peut également mentionner les copolymères de MAPTAC de formule ci-dessus dans laquelle les motifs dérivés de l'acide acrylique sont remplacés par des motifs dérivés de l'acide maléique, de l'acide vinylsulfonique, de l'acide styrène sulfonique (sels de sodium), ou du N-(1-sulfo-2-isobutyl)acrylamide ; de même les motifs dérivés de l'acrylamide peuvent être remplacés par des motifs dérivés de l'alcool vinylique ou de l'acrylate d'hydroxyéthyle.

D'autres copolymères avantageux sont ceux dérivés de DADMAC de même formule que ceux ci-dessus

dérivés de MAPTAC.

Tous les biocides cationiques conviennent au but de l'invention. Le biocide est de préférence choisi parmi :

* les sels de monoammonium quaternaire de formules

$$R^1\ R^2\ R^3\ R^4\ N^+\ X^-$$

où
$R^1$ représente un groupe benzyle éventuellement substitué par un atome de chlore ou un groupe $C_1$-$C_4$ alkylbenzyle,
$R^2$ représente un groupe alkyle en $C_8$-$C_{24}$,
$R^3$ et $R^4$, semblables ou différents, représentent un groupe alkyle ou hydroxyalkyle en $C_1$-$C_4$,
$X^-$ est un anion solubilisant tel qu'halogénure (par exemple chlorure, bromure, iodure), sulfate ou méthylsulfate.

$$R^{1'}\ R^{2'}\ R^{3'}\ R^{4'}\ N^+\ X^-$$

où
$R^{1'}$ et $R^{2'}$, semblables ou différents, représentent un groupe alkyle en $C_8$-$C_{24}$,
$R^{3'}$ et $R^{4'}$, semblables ou différents, représentent un groupe alkyle en $C_1$-$C_4$,
$X^-$ est un anion solubilisant tel qu'halogénure (par exemple chlorure, bromure, iodure), sulfate ou méthylsulfate.

$$R^{1''}\ R^{2''}\ R^{3''}\ R^{4''}\ N^+\ X^-$$

où
$R^{1''}$ représente un groupe alkyle en $C_8$-$C_{24}$,
$R^{2''}$, $R^{3''}$ et $R^{4''}$, semblables ou différents, représentent un groupe alkyle en $C_1$-$C_4$,
$X^-$ est un anion solubilisant tel qu'halogénure (par exemple chlorure, bromure, iodure), sulfate ou méthylsulfate ; notamment :

. les chlorures de coco-alkyl benzyl diméthylammonium, de $C_{12}$-$C_{14}$ alkyl benzyl diméthylammonium, de coco-alkyl dichlorobenzyl diméthylammonium, de tetradecyl benzyl diméthylammonium, de didécyl diméthylammonium, de dioctyl diméthylammonium

  * les sels d'amines hétérocycliques monoquaternaires tels que les chlorures de laurylpyridinium, de cétylpyridinium, de $C_{12}$-$C_{14}$ alkyl benzyl imidazolium :

  * les sels d'alkyl gras triphényl phosphonium comme le bromure de myristyl triphényl phosphonium ;

  * les biocides amphotères comme les dérivés de N-(N'-$C_8$-$C_{18}$alkyl-3-aminopropyl)-glycine, de N-(N'-(N"-$C_8$-$C_{18}$alkyl-2-aminoéthyl)-2-aminoéthyl)-glycine, de N,N-bis(N'-$C_8$-$C_{18}$alkyl-2-aminoéthyl)-glycine, tels que le (dodécyl) (aminopropyl) glycine, le (dodécyl) (diéthylènediamine) glycine ;

  * les amines comme la N-(3-aminopropyl)-N-dodecyl-1,3-propanediamine.

L'utilisation des polymères de l'invention dans des formules comprenant un biocide cationique pour le traitement des surfaces dures apporte une efficacité accrue du biocide et limite les effets négatifs rencontrés avec ce type de formule.

En effet, les groupes cationiques (a) du polymère permettent une adsorption importante et rémanente du polymère sur la surface dure, qui est généralement négativement chargée.

Les groupes anioniques (b) du polymère interagissent avec le biocide cationique et permettent un bon ancrage du biocide sur la surface dure.

Il est à noter qu'en l'absence de polymère, les biocides cationiques peuvent également interagir avec la surface dure, mais cette interaction est nettement plus importante avec un polymère, grâce à l'effet coopératif des liaisons polymère/surface.

L'utilisation conjointe d'un biocide cationique et du polymère de l'invention apporte ainsi les avantages suivants :

- le polymère selon l'invention permet de vectoriser le biocide sur la surface dure ; ceci permet un ancrage du biocide sur la surface à traiter, et augmente l'efficacité du biocide ;
- le polymère selon l'invention reste présent après des rinçages successifs et permet une adsorption rémanente du biocide sur la surface ; ceci permet d'obtenir une efficacité à long terme du biocide ;
- le polymère selon l'invention permet de plus de diminuer substantiellement la quantité de biocide nécessaire à l'obtention d'une bonne activité biocide sur la surface traitée.

Un deuxième objet de l'invention consiste en l'utilisation, dans une composition biocide aqueuse comprenant un biocide cationique pour le traitement des surfaces dures, dudit polymère hydrosoluble en tant qu'agent de vectorisation et/ou de libération contrôlée dudit biocide sur la surface dure à traiter.
Outre le composé biocide cationique, le polymère hydrosoluble selon l'invention, la composition de traitement de surfaces dures peut comprendre notamment un agent tensioactif.
On préfère les agents tensioactifs non ioniques.
Parmi les agents tensioactifs non ioniques, on peut citer en particulier les condensats d'oxyde d'alkylène, notamment d'oxyde d'éthylène avec des alcools, des polyols, des alkylphénols, des esters d'acides gras, des amides d'acides gras et des amines grasses ; les amines-oxydes, les dérivés de sucre tels que les alkylpolyglycosides ou les esters d'acides gras et de sucres, notamment le monopalmitate de saccharose ; les oxydes de phosphine tertiaire à longue chaîne ; les dialkylsulfoxydes ; les copolymères séquences de polyoxyéthylène et de polyoxypropylène ; les esters de sorbitane polyalkoxylés ; les esters gras de sorbitane, les poly(oxyde d'éthylène) et amides d'acides gras modifiés de manière à leur conférer un caractère hydrophobe (par exemple, les mono- et diéthanolamides d'acides gras contenant de 10 à 18 atomes de carbone).
On peut citer tout notamment

les alkylphénols polyoxyalkylénés (polyéthoxyéthylénés, polyoxypropylénés, polyoxybutylénés) dont le substituant alkyle est en $C_6$-$C_{12}$ et contenant de 5 à 25 motifs oxyalkylènes ; à titre d'exemple, on peut citer les TRITON X-45, X-114, X-100 ou X-102 commercialisés par Rohm & Haas Cy. ;

. les glucosamides, glucamides, glycérolamides ;
. les alcools aliphatiques en $C_8$-$C_{22}$ polyoxyalkylénés contenant de 1 à 25 motifs oxyalkylènes (oxyéthytène, oxypropylène). A titre d'exemple, on peut citer les TERGITOL 15-S-9, TERGITOL 24-L-6 NMW commercialisés par Union Carbide Corp., NEODOL 45-9, NEODOL 23-65, NEODOL 45-7, NEODOL 45-4 commercialisés par Shell Chemical Cy., les RHODASURF IDO60, RHODASURF LA90, RHODASURF IT070 commercialisés par la société RHODIA.
. les oxydes d'amines tels que les oxydes d'alkyl $C_{10}$-$C_{18}$ diméthylamines, les oxydes d'alkoxy $C_8$-$C_{22}$ éthyl dihydroxy éthylamines ;
. les alkylpolyglycosides décrits dans US-A-4 565 647 ;
. les amides d'acides gras en $C_8$-$C_{20}$ ;
. les acides gras éthoxylés ;
. les amines éthoxylées.

L'invention a également pour objet l'utilisation telle que définie précédemment, caractérisée en ce que l'on applique une composition comprenant :

- un composé biocide cationique ;
- un polymère hydrosoluble tel que défini précédemment ;
- un tensioactif non ionique.

Avantageusement, la composition comprend :

- de 0,1 à 10%, de préférence de 0,3 à 5% en poids d'un biocide cationique :
- de 0.01 à 3%, de préférence 0,05 à 2% en poids d'un polymère hydrosoluble tel que défini précédemment ;
- de 0,5 à 15%, de préférence de 1 à 10% en poids, d'un tensioactif non ionique.

La composition nettoyante selon l'invention est appliquée sur la surface à traiter en une quantité telle qu'elle autorise après rinçage le cas échéant, et après séchage un dépôt de copolymère selon l'invention de 0,0001 à 1g/m$^2$, de préférence 0, 001 à 0,1g/m$^2$ de surface à traiter.
Selon l'invention, à côté du biocide et du copolymère selon l'invention, constituants principaux du système biocide aqueux de l'invention, peuvent être présents, et ce d'une manière avantageuse, d'autres constituants, comme, des agents chélatants (tels que les aminocarboxylates (éthylènediaminetetraacétates, nitrilotriacétates, N,N-bis(carboxyméthyl) glutamates, citrates), des alcools (éthanol, isopropanol, glycols), des adjuvants de détergence (phosphates, silicates), des colorants, des parfums...

Ladite composition nettoyante biocide peut être mise en oeuvre pour la désinfection de planchers, murs, surfaces de travail, équipement, mobilier, instruments... dans l'industrie, le domaine agro-alimentaire, les domaines-domestiques (cuisines, salles de bain...) et en collectivité.

Parmi les surfaces pouvant être traitées, on peut citer celles en céramique, verre, polychlorure de vinyle, formica ou autre polymère organique dur, acier inoxydable, aluminium, bois...

L'opération de nettoyage et de désinfection consiste à appliquer ladite composition nettoyante biocide, éventuellement diluée de 1 à 1 000 fois, de préférence de 1 à 100 fois, sur la surface dure à traiter.

La quantité de système biocide pouvant être favorablement mise en oeuvre est celle correspondant à un dépôt de 0,01 à 10 g, de préférence de 0,1 à 1 g de biocide par $m^2$ de surface et à un dépôt de 0,001 à 2 g, de préférence de 0,01 à 0,5 g de copolymère de l'invention par $m^2$ de surface.

Parmi les microorganismes dont la prolifération peut être contrôlée par mise en oeuvre de la composition nettoyante biocide de l'invention, on peut mentionner

- les bactéries Gram négatives comme : Pseudomonas aeruginosa ; Escherichia coli ; Proteus mirabilis ;
- les bactéries Gram positives comme : Staphylococcus aureus ; Streptococcus faecium ;
- d'autres bactéries dangereuses dans l'alimentation comme : Salmonella typhimurium ; Listeria monocytogenes ; Campylobacter jejuni ; Yersinia enterocolitica ;
- les levures comme : Saccharomyces cerevisiae ; Candida albicans ;
- les champignons comme : Aspergillus niger ; Fusarium solani ; Pencillium chrysogenum ;
- les algues comme : Chlorella saccharophilia ; Chlorella emersonii ; Chlorella vulgaris ; Chlamydomonas eugametos.

Le système biocide de l'invention est tout particulièrement efficace sur les microorganismes Gram négatif Pseudomonas aeroginosa, Gram positif Staphylococcus aureus, le champignon Aspergillus niger.

Les exemples suivants illustrent l'invention.

**Exemples 1 à 5 :**

Test de désinfection d'une surface dure

1) solutions aqueuses biocides testées

On prépare les solutions aqueuses biocides suivantes :

solution constituée de :

| | |
|---|---|
| Rhodaquat RP 50* | 3% (soit 1,5% de matière active biocide) |
| + tensioactif non-ionique | 5% (alcool en $C_{10}$ à 6 motifs oxyde d'éthylène) |
| + polymère | 0 ou 0,15% |

* chlorure de ($C_{12}$-$C_{14}$)alkyl benzyl diméthyl ammonium.

Ces solutions sont ensuite diluées 60 fois pour la réalisation du test.

Les polymères évalués lors de ces essais ont les structures suivantes :

Polymère 1 :

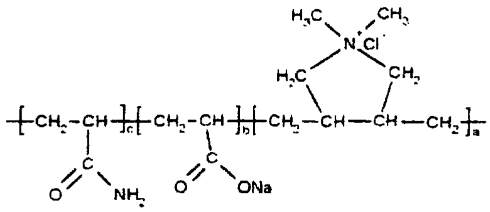

avec a = 4, b = 4, c = 2

Polymères 2 à 4 :

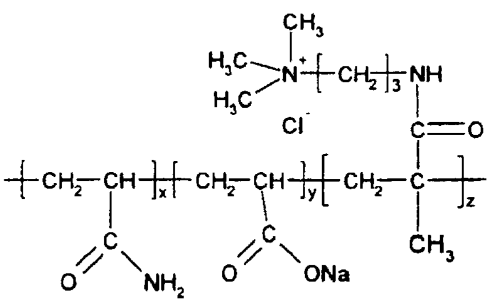

Polymère 2 :

x = 2, y = 4, z = 4

Polymère 3 :

x = 2, y = 6, z = 2

Polymère 4 :

x = 0, y = 7, z = 3

Polymère 5 :

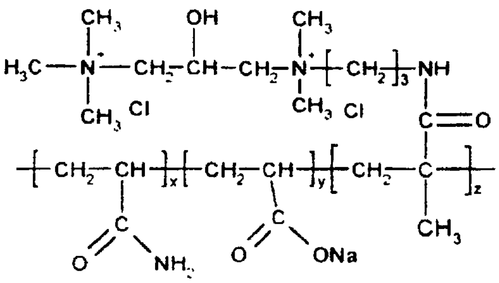

avec x = 2, y = 4, z = 4

Le polymère 5 est préparé comme suit :

Dans un réacteur de 1 litre, on ajoute les ingrédients suivants :

| | |
|---|---|
| Eau déminéralisée | 633 |
| Acrylamide 52% | 29,3 |
| Acide acrylique | 30,9 |
| Monomère Diquat 65% | 236,7 |
| Versene 100 (EDTA de Dow Chemical) | 0,2 |

Le mélange obtenu est chauffé doucement à un pH d'environ 2,6 sous une purge d'azote douce à 75°C. Après 30 minutes, lorsque la température atteint 75°C, on ajoute une solution d'initiateur à base de persulfate de sodium (0,1 g dans 1,0 g d'eau déminéralisée) en une seule fois dans le réacteur. Un refroidissement est nécessaire pour maintenir la température à 75°C, et le mélange devient visqueux après environ 45 minutes. Deux portions supplémentaires de solution d'initiation à base de persulfate sont ajoutées après une et deux heures de réaction respectivement. Ensuite, le mélange réactionnel est chauffé à une température de 85°C et maintenu à cette température pendant deux heures supplémentaires avant d'être refroidi à 25°C. La viscosité de la solution de polymère 1 résultante est d'environ 29 500 cps avec une teneur total en solides d'environ 20,5%. Le pH de la solution à 10% est d'environ 2,2. L'acrylamide résiduel est inférieur à 0,1 % en poids.

2) <u>mode de réalisation du test sur carreau de céramique blanche</u>

1. Ajouter 3 g de solution aqueuse biocide diluée à la surface du carreau de céramique (5 cm × 5 cm) préalablement stérilisé par nettoyage à l'alcool isopropylique. Sécher à 45°C en étuve.

2. Placer la surface du carreau verticalement et l'asperger d'un gramme d'eau à l'aide d'un pulvérisateur à main. Cela correspond à un lavage sans action mécanique. Entre 0 et 15 lavages sont ainsi réalisés avant séchage à 45°C.

3. Ajouter 0,25 ml d'un milieu aqueux contenant environ $10^8$ UFC/ml de bactérie Gram négative, <u>Pseudomonas aeruginosa</u>, étaler sur la surface dure préalablement traitée.

4. Laisser à température ambiante pendant 3 heures, pour permettre au biocide de migrer hors de la surface du polymère et de tuer les bactéries en surface.

5. Sécher à 37°C pendant au moins 30 minutes.

6. Récupérer les microorganismes survivants en utilisant un tampon d'ouate stérile préalablement humecté d'une solution neutralisante. Nettoyer soigneusement toute la surface par essuyage 4 fois en tous sens.

7. Introduire le tampon dans 9ml de milieu neutralisant ; ajuster à 10ml avec de l'eau. Transférer la suspension bactérienne sur Nutrient Agar dans des boîtes de Petri par dilutions successives d'un facteur 10.

8. Incuber les boîtes à 37°C pendant 48 heures et compter les microorganismes survivants.

* Le milieu neutralisant contient 3% de polysorbate Tween 80 et 2% de lécithine de soja.
* Un test de contrôle est effectué en réalisant les étapes 1. à 7. sur la surface d'un carreau de céramique blanche (5 cm × 5 cm) préalablement stérilisé mais non traité par le système biocide.
* Le $\log_{10}$ de réduction du nombre de bactéries est calculé comme suit :

$$\log_{10} \text{ de réduction} = \log_{10} N/n$$

N étant le nombre de bactéries (en UFC/ml) survivantes dans le test de contrôle ;
n étant le nombre de bactéries (en UFC/ml) survivantes dans le test mettant en oeuvre le système biocide.

3) résultats

Les résultats du test ci-dessus réalisé figurent dans tableaux 1.

- Les résultats de l'exemple 6, donné à titre comparatif montrent qu'une solution aqueuse d'agent biocide seul ne résiste pas aux 15 rinçages.
- Les résultats de l'exemple 7, donné à titre comparatif, montrent que les polymères 1 à 5, en eux-mêmes, ne possèdent pas de propriété biocide.
- Les résultats des exemples 1 à 5 montrent que l'interaction entre le biocide et le polymère apporte une protection à long terme de la surface contre les bactéries, sans dégradation des performances bactéricides à court terme.

| Exemple | Polymère | $\log_{10}$ de réduction après 0 lavage | $\log_{10}$ de réduction après 15 lavages |
|---|---|---|---|
| 1 | Polymère 1 : 0,15% | 6 | 6 |
| 2 | Polymère 2 : 0,15% | 6 | 6 |
| 3 | Polymère 3 : 0,15% | 6 | 6 |
| 4 | Polymère 4 : 0,15% | 6 | 6 |
| 5 | Polymère 5 : 0,15% | 6 | 6 |
| 6 | Sans polymère | 6 | 0 |
| 7 | Sans biocide et avec 0,15% de Polymère 1 à 5 | 0 | 0 |

**Revendications**

**1.** Utilisation d'au moins un polymère hydrosoluble obtenu par copolymérisation :

- d'au moins un monomère (a) à insaturation éthylénique possédant un groupe susceptible de se protoner dans le milieu d'application avec
- au moins un monomère à insaturation éthylénique (b) portant une fonction à caractère acide copolymérisable avec (a) et susceptible de s'ioniser négativement dans le milieu d'application ; et
- éventuellement au moins un monomère à insaturation éthylénique (c) de charge neutre, de préférence portant un ou plusieurs groupes hydrophiles, copolymérisables avec (a) et (b) ;

pour améliorer l'efficacité biocide de compositions biocides aqueuses comprenant un composé biocide cationique.

**2.** Utilisation selon la revendication 1, **caractérisée en ce que** le monomère (a) comprend au moins un groupe ammonium quaternaire.

**3.** Utilisation selon la revendication 1 ou la revendication 2, dans laquelle le monomère (a) est choisi parmi les composés de formules générales I, II et III suivantes :

*formule I :*

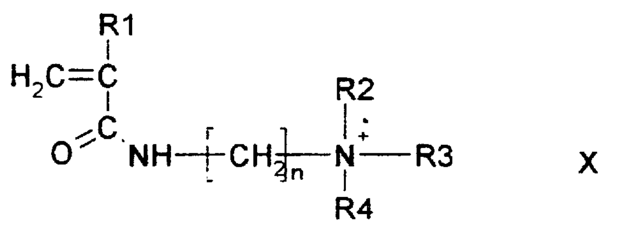

dans laquelle

- $R_1$ est un atome d'hydrogène ou un groupe méthyle, de préférence un groupe méthyle,
- $R_2$, $R_3$ et $R_4$ sont des groupes alkyle linéaire ou ramifié en $C_1$-$C_4$.
- n représente un nombre entier de 1 à 4, notamment le nombre 3,
- X représente un contre-ion compatible avec le caractère hydrosoluble du polymère.

*formule II :*

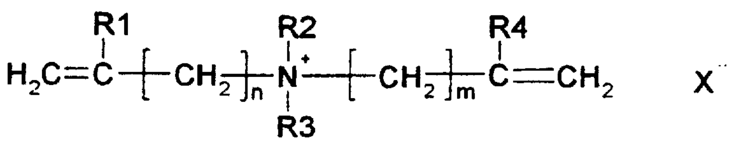

dans laquelle

- $R_1$ et $R_4$ représentent indépendamment l'un de l'autre un atome d'hydrogène ou un groupe alkyle en $C_1$-$C_6$ linéaire ou ramifié,
- $R_2$ et $R_3$ représentent indépendamment l'un de l'autre un groupe alkyle, hydroxyalkyle, ou aminoalkyle dans lesquelles le groupe alkyle est une chaîne en $C_1$-$C_6$, linéaire ou ramifiée, de préférence un groupe méthyle,
- n et m sont des nombres entiers compris entre 1 et 3,
- X représente un contre-ion compatible avec le caractère hydrosoluble du polymère.

*formule III :*

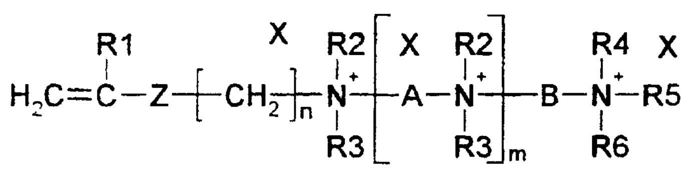

dans laquelle

- $R_1$ est un atome d'hydrogène, un groupe méthyle ou éthyle,
- $R_2$, $R_3$, $R_4$, $R_5$, $R_6$ identiques ou différents sont des groupes alkyle, hydroxyalkyle ou aminoalkyle, linéaire ou ramifié en $C_1$-$C_6$, de préférence en $C_1$-$C_4$,

- m est un nombre entier de 0 à 10, de préférence de 0 à 2,
- n est un nombre entier de 1 à 6, de préférence 2 à 4,
- Z représente un groupe -C(O)O-, -C(O)NH- ou un atome d'oxygène,
- A représente un groupe $(CH_2)_p$, p étant un nombre entier de 1 à 6, de préférence de 2 à 4,
- B représente une chaîne polyméthylène linéaire ou ramifiée en $C_2$-$C_{12}$, avantageusement $C_3$-$C_6$, éventuellement interrompue par un ou plusieurs hétéroatomes ou hétérogroupes, notamment O ou NH, et éventuellement substituée par un ou plusieurs groupes hydroxyles ou amino, de préférence hydroxyles,
- X identiques ou différents représentent des contre-ions compatibles avec le caractère hydrosoluble du polymère.

**4.** Utilisation selon la revendication 3, **caractérisée en ce que** le monomère (a) est représenté par la formule suivante :

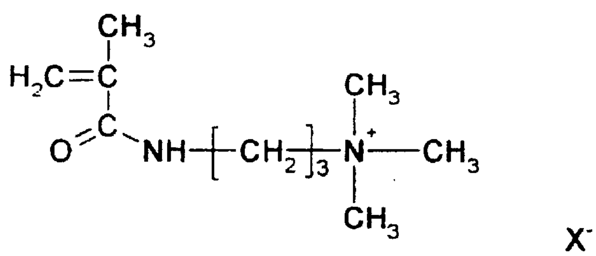

$X^-$ étant tel que défini à la revendication 1, de préférence un chlorure (MAPTAC).

**5.** Utilisation selon la revendication 3, **caractérisée en ce que** le monomère (a) est représenté par la formule suivante :

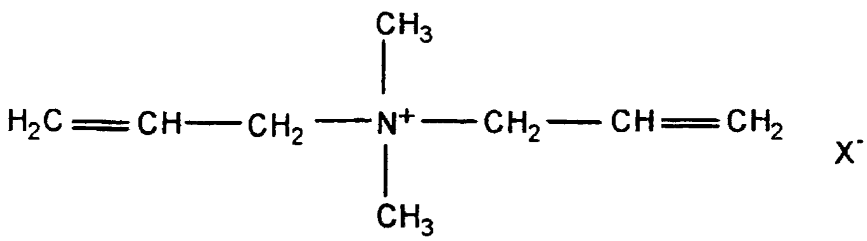

$X^-$ étant tel que défini à la revendication 1, de préférence un chlorure (DADMAC).

**6.** Utilisation selon la revendication 3, **caractérisée en ce que** le monomère (a) est représenté par la formule générale III selon la revendication 5, dans laquelle

- Z représente C(O)O, C(O)NH ou O, tout préférentiellement C(O)NH ;
- n est égal à 2 ou 3, tout particulièrement 3 ;
- m va de 0 à 2, de préférence est égal à 0 ou 1, tout particulièrement à 0 ;
- B représente

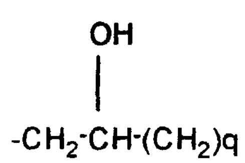

avec q de 1 à 4, de préférence égal à 1 ;
- $R_1$ à $R_6$ identiques ou différents représentent un groupe méthyle ou éthyle.

**7.** Utilisation selon la revendication 6, **caractérisée en ce que** le monomère (a) est représenté par la formule suivante :

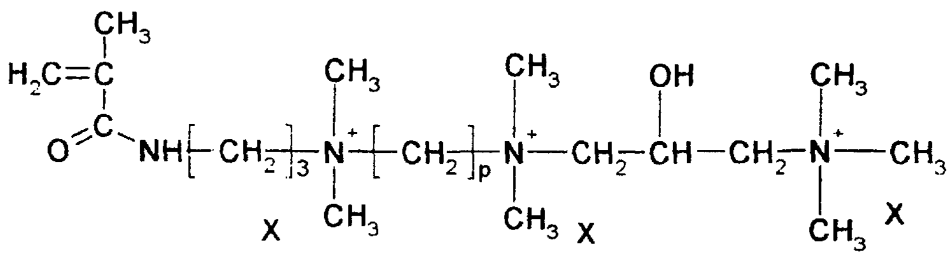

**8.** Utilisation selon la revendication 7, **caractérisée en ce que** le monomère (a) est :

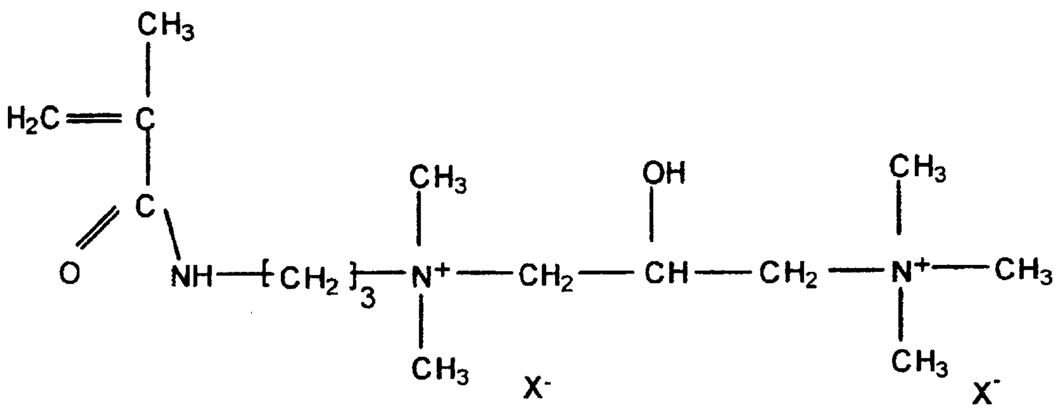

$X^-$ représentant l'ion chlorure (DIQUAT).

**9.** Utilisation selon l'une quelconque des revendications précédentes, **caractérisée en ce que** (b) est choisi parmi les acides carboxyliques, sutfoniques, sulfuriques, phosphoniques et phosphoriques en $C_3$-$C_8$ à insaturation monoéthylénique.

**10.** Utilisation selon la revendication 9, **caractérisée en ce que** le monomère (b) est choisi parmi l'acide acrylique, l'acide méthacrylique, l'acide $\alpha$-éthacrylique, l'acide $\beta$,$\beta$-diméthylacrylique, l'acide méthylènemalonique, l'acide vinylacétique, l'acide allylacétique, l'acide éthylidineacétique, l'acide propylidineacétique, l'acide crotonique, l'acide maléique, l'acide fumarique, l'acide itaconique, l'acide citraconique, l'acide mésaconique, la N-méthacroyl-alanine, la N-acryloyl-hydroxy-glycine, l'acrylate de sulfopropyle, l'acrylate de sulfoéthyle, le méthacrylate de sulfoéthyle, l'acide styrène sulfonique, l'acide vinyl sulfonique, l'acide vinylphosphonique, l'acrylate de phosphoéthyle, l'acrylate de phophonoéthyle, l'acrylate de phosphopropyle, l'acrylate de phophonopropyle, le méthacrylate de phosphoethyle, le méthacrylate de phophonoethyle, le méthacrylate de phosphopropyle, le méthacrylate de phophonopropyle, et les sels de métal alcalin et d'ammonium de ceux-ci.

**11.** Utilisation selon l'une quelconque des revendications précédentes, **caractérisée en ce que** le monomère (c) est choisi parmi l'acrylamide, l'alcool vinylique, les esters d'alkyle en $C_1$-$C_4$ de l'acide acrylique et de l'acide méthacrylique, les esters d'hydroxyalkyle en $C_1$-$C_4$ de l'acide acrylique et de l'acide méthacrylique, notamment l'acrylate et le méthacrylate d'éthylène glycol et de propylène glycol, les esters polyalkoxylés de l'acide acrylique et de l'acide méthacrylique, notamment les esters de polyéthylène glycol et de polypropylène glycol, les esters de l'acide acrylique ou de l'acide méthacrylique et de polyéthylène glycol ou polypropylène glycol mono $C_1$-$C_{25}$ alkyl éthers, l'acétate de vinyle, la vinylpyrrolidone, le méthylvinyléther.

**12.** Utilisation selon l'une quelconque des revendications précédentes, **caractérisée en ce que** dans les formules générales 1, II et/ou III, X est choisi parmi les anions d'halogène, notamment de chlore, sulfonate, sulfate, hydrogénosulfate, phosphate, phosphanate, citrate, formiate et acétate.

**13.** Utilisation selon l'une quelconque des revendications précédentes, **caractérisée en ce que** le copolymère hydrosoluble est obtenu par copolymérisation :

- de 3 à 80%, de préférence 10 à 70% molaire du monomère (a),
- de 10 à 95%, de préférence 20 à 80% molaire du monomère (b),
- de 0 à 50%, de préférence de 5 à 30% molaire du monomère (c),

le taux de monomère (c) éventuel étant tel que le polymère soit soluble dans le milieu aqueux d'application.

**14.** Utilisation selon l'une quelconque des revendications précédentes, **caractérisée en ce que** le rapport molaire (a) /(b) est compris entre 80/20 et 5/95, de préférence entre 75/25 et 20/80.

**15.** Utilisation selon l'une quelconque des revendications précédentes, **caractérisée en ce que** la masse moléculaire du copolymère est d'au moins 1 000, avantageusement d'au moins 10 000 et d'au plus 20 000 000, avantageusement d'au plus 10 000 000.

**16.** Utilisation selon la revendication 1, **caractérisé en ce que** le polymère est choisi parmi les composés suivants :

* les copolymères de MAPTAC

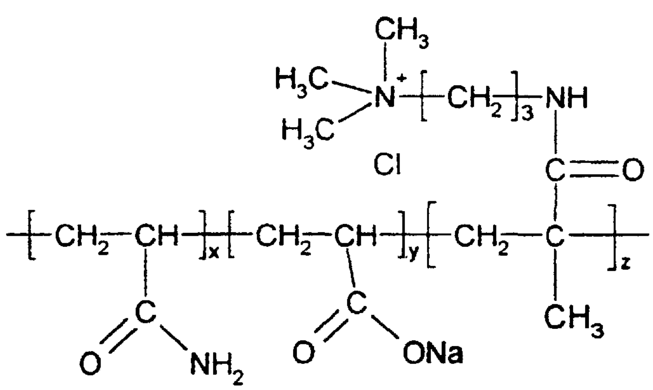

avec x+y+z = 100%, x, y et z représentant les % molaires de chaque motif dérivé de chacun des monomères (c), (b) et (a)

y/z = 25/75 à 70/30

et x ayant une valeur moyenne de 0 à 40%, de préférence de 10 à 30%,

et les copolymères homologues dans lesquels le monomère (b) acide acrylique (sel de sodium) et/ou (c) acrylamide est remplacé par monomère (b) différent choisi parmi l'acide maléique, l'acide vinylsulfonique, l'acide styrène sulfonique (sels de sodium), N-(1-sulfo-2-isobutyl)acrylamide et/ou un monomère (c) différent choisi parmi l'alcool vinylique, l'acrylate d'hydroxyéthyle

* les copolymères de DADMAC homologues aux copolymères de MAPTAC précédents, dans lesquels le MAPTAC est remplacé par du DADMAC comme monomère (a)

* les copolymères de DIQUAT

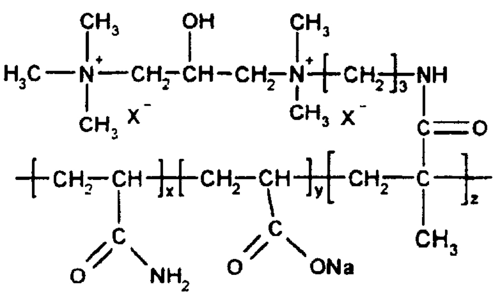

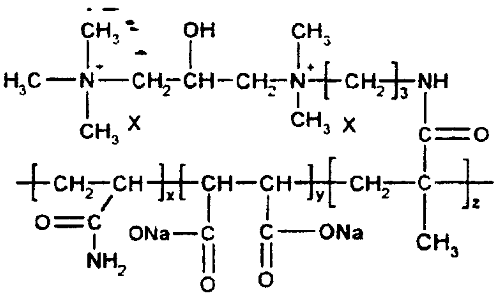

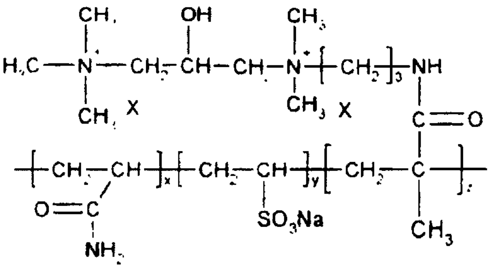

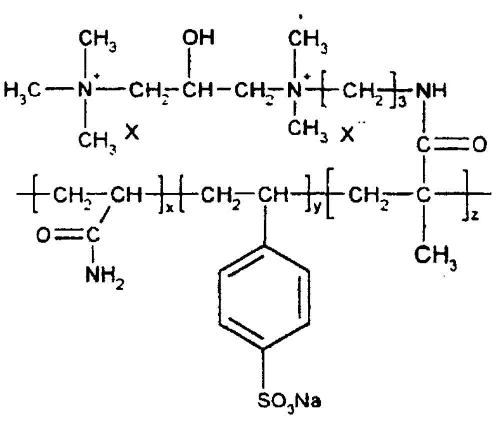

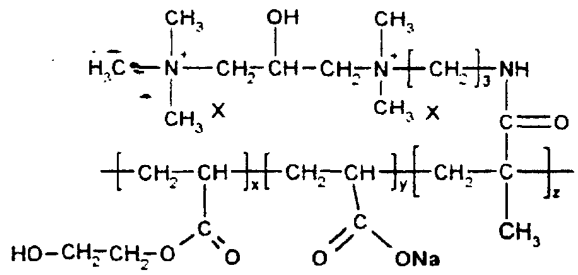

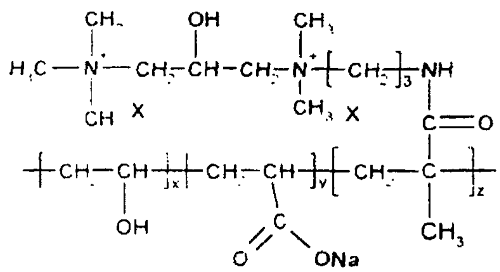

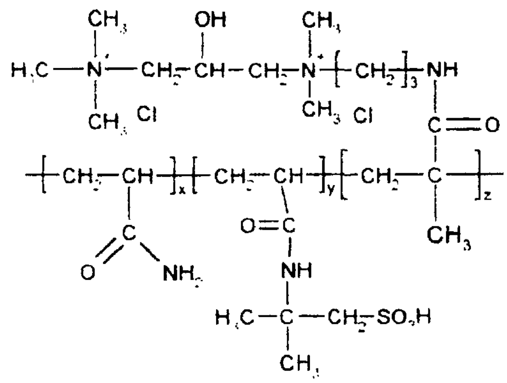

avec

x ayant une valeur moyenne de 0 à 50%, de préférence de 0 à 30%, tout particulièrement de 5 à 25%,
y ayant une valeur moyenne de 10 à 95%, de préférence de 20 à 70%,
z ayant une valeur moyenne de 3 à 80%, de préférence de 10 à 60%,
et le rapport y/z étant de manière préférée de l'ordre de 4/1 à 1/3,

avec x+y+z = 100%, x, y et z représentant les % molaires de chaque motif dérivé de chacun des monomères (c), (b) et (a).

**17.** Utilisation selon l'une quelconque des revendications précédentes, **caractérisée en ce que** le composé biocide cationique est choisi parmi :

- les sels de monoammonium quaternaires ;
- les sels d'amines hétérocycliques monoquaternaires ;
- les sels d'alkyl triphényl phosphonium ;
- les biocides polymères.

**18.** Utilisation selon l'une quelconque des revendications précédentes, **caractérisée en ce que** ladite composition biocide comprend en outre un agent tensioactif non-ionique.

**19.** Utilisation selon la revendication 18, **caractérisée en ce que** la composition comprend :

- de 0,1 à 10%, de préférence de 0,3 à 5% en poids d'un biocide cationique ;
- de 0,01 à 3%, de préférence 0,05 à 2% en poids d'un polymère hydrosoluble tel que défini aux revendications 1 à 16 ;
- de 0,5 à 15%, de préférence de 1 à 10% en poids, d'un tensioactif non ionique.

**20.** Utilisation selon l'une quelconque des revendications 1 à 19, pour le traitement biocide des surfaces dures.

**21.** Utilisation, dans une composition biocide aqueuse comprenant un biocide cationique pour le traitement des surfaces dures, du polymère hydrosoluble tel que défini aux revendications 1 à 16, en tant qu'agent de vectorisation et/ou de libération contrôlée dudit biocide sur la surface dure à traiter.

## Patentansprüche

**1.** Verwendung mindestens eines wasserlöslichen Polymers, erhalten durch Copolymerisation

- mindestens eines ethylenisch ungesättigten Monomers (a) mit einer Gruppe, die sich in dem Anwendungsmilieu protonieren kann, mit

- mindestens einem ethylenisch ungesättigten Monomer (b) mit einer Funktion mit saurem Charakter, welches mit (a) copolymerisierbar ist und in sich dem Anwendungsmilieu negativ ionisieren kann; und

- gegebenenfalls mindestens einem ethylenisch ungesättigten Monomer (c) mit neutraler Ladung, vorzugsweise mit einer oder mehreren hydrophilen Gruppen, welche mit (a) und (b) copolymerisierbar sind;

zur Verbesserung der bioziden Wirksamkeit von wäßrigen Biozidzusammensetzungen, die eine kationische biozide Verbindung enthalten.

**2.** Verwendung nach Anspruch 1, **dadurch gekennzeichnet, daß** das Monomer (a) mindestens eine quartemäre Ammoniumgruppe umfaßt.

**3.** Verwendung nach Anspruch 1 oder Anspruch 2, wobei das Monomer (a) ausgewählt ist aus Verbindungen der folgenden allgemeinen Formeln I, II und III:

Formel I:

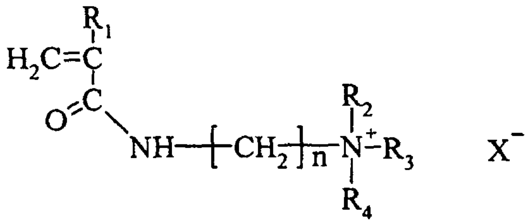

wobei:

- $R_1$ ein Wasserstoffatom oder eine Methylgruppe, vorzugsweise eine Methylgruppe, ist,

- $R_2$, $R_3$ und $R_4$ lineare oder verzweigte $C_1$-$C_4$-Alkylgruppen sind,

- n eine ganze Zahl von 1 bis 4, insbesondere die Zahl 3, darstellt,

- X ein Gegenion darstellt, das mit dem wasserlöslichen Charakter des Polymers kompatibel ist;

Formel II:

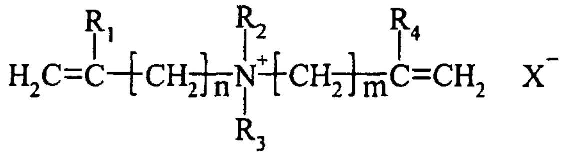

wobei:

- $R_1$ und $R_4$, unabhängig voneinander, ein Wasserstoffatom oder eine lineare oder verzweigte $C_1$-$C_6$-Alkylgruppe darstellen,
- $R_2$ und $R_3$, unabhängig voneinander, eine Alkyl-, Hydroxyalkyl- oder Aminoalkylgruppe darstellen, wobei die Alkylgruppe eine lineare oder verzweigte $C_1$-$C_6$-Kette, vorzugsweise eine Methylgruppe, ist,
- n und m ganze Zahlen zwischen 1 und 3 sind,
- X ein Gegenion darstellt, das mit dem wasserlöslichen Charakter des Polymers kompatibel ist,

Formel III:

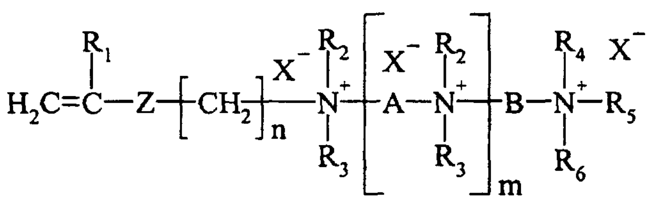

wobei

- $R_1$ ein Wasserstoffatom oder eine Methyl- oder Ethylgruppe ist,
- $R_2$, $R_3$, $R_4$, $R_5$ und $R_6$, identisch oder verschieden, lineare oder verzweigte $C_1$-$C_6$-, vorzugsweise $C_1$-$C_4$-Alkyl-, Hydroxyalkyl- oder Aminoalkylgruppen sind,
- m eine ganze Zahl von 0 bis 10, vorzugsweise 0 bis 2, ist,
- n eine ganze Zahl von 1 bis 6, vorzugsweise 2 bis 4, ist,
- Z eine Gruppe -C(O)O-, -C(O)NH- oder ein Sauerstoffatom darstellt,
- A eine Gruppe $(CH_2)_p$ darstellt, wobei p eine ganze Zahl von 1 bis 6, vorzugsweise 2 bis 4, ist,
- B eine lineare oder verzweigte $C_2$-$C_{12}$-, vorzugsweise $C_3$-$C_6$-Polymethylenkette darstellt, die gegebenenfalls durch ein oder mehrere Heteroatome oder Heterogruppen, insbesondere O oder NH, unterbrochen ist und gegebenenfalls mit einem oder mehreren Hydroxyl- oder Aminogruppen, vorzugsweise Hydroxylgruppen, substituiert ist,
- X, identisch oder verschieden, Gegenionen darstellt, die mit dem wasserlöslichen Charakter des Polymers kompatibel sind.

**4.** Verwendung nach Anspruch 3, **dadurch gekennzeichnet, daß** das Monomer (a) durch die folgende Formel dargestellt wird:

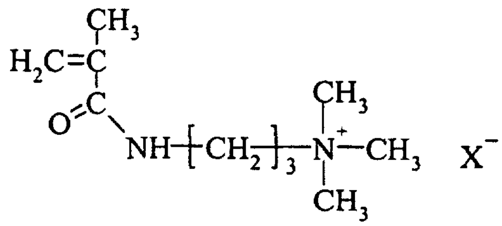

wobei X- der in Anspruch 1 angegebenen Definition entspricht, vorzugsweise ein Chlorid (MAPTAC) ist.

**5.** Verwendung nach Anspruch 3, **dadurch gekennzeichnet, daß** das Monomer (a) durch die folgende Formel dargestellt wird:

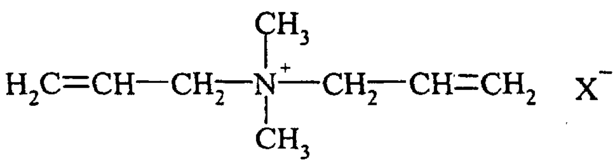

wobei X- der in Anspruch 1 angegebenen Definition entspricht, vorzugsweise ein Chlorid (DADMAC) ist.

**6.** Verwendung nach Anspruch 3, **dadurch gekennzeichnet, daß** das Monomer (a) durch die allgemeine Formel III gemäß Anspruch 5 dargestellt wird, wobei:

- Z darstellt: C(O)O, C(O)NH oder O, ganz besonders bevorzugt C(O)NH;
- n gleich 2 oder 3, insbesondere 3, ist;
- m von 0 bis 2 geht, vorzugsweise gleich 0 oder 1 ist, insbesondere 0 ist;
- B darstellt:

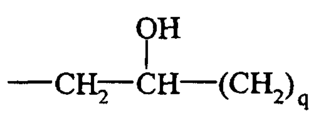

mit q gleich 1 bis 4, vorzugsweise gleich 1;

- $R_1$ bis $R_6$, identisch oder verschieden, eine Methyl- oder Ethylgruppe darstellen.

**7.** Verwendung nach Anspruch 6, **dadurch gekennzeichnet, daß** das Monomer (a) durch die folgende allgemeine Formel dargestellt wird:

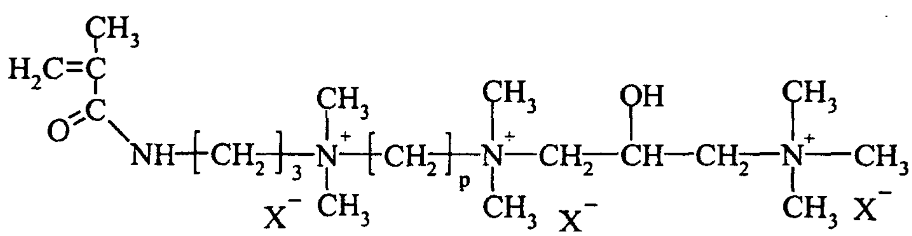

mit p von 2 bis 4 ist.

8. Verwendung nach Anspruch 7, **dadurch gekennzeichnet, daß** das Monomer (a)

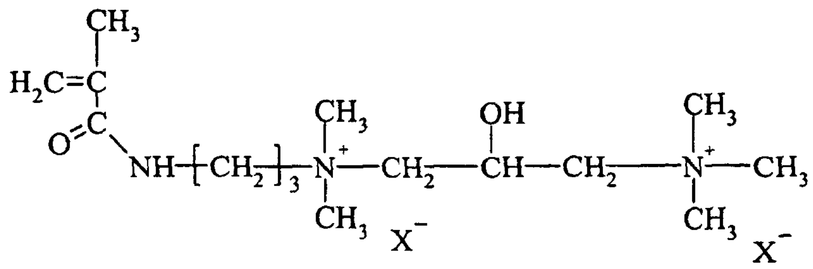

ist, wobei $X^-$ ein Chloridion (DIQUAT) darstellt.

9. Verwendung nach einem der vorhergehenden Ansprüche, **dadurch gekennzeichnet, daß** (b) ausgewählt ist aus Carbonsäuren, Sulfonsäuren, Schwefelsäuren, Phosphonsäuren und Phosphorsäuren mit einfach ethylenisch ungesättigtem $C_3$-$C_8$.

10. Verwendung nach Anspruch 9, **dadurch gekennzeichnet, daß** das Monomer (b) ausgewählt ist aus Acrylsäure, Methacrylsäure, α-Ethacrylsäure, β,β-Dimethylacrylsäure, Methylenmalonsäure, Vinylessigsäure, Allylessigsäure, Ethylidinessigsäure, Propylidinessigsäure, Crotonsäure, Maleinsäure, Fumarsäure, Itaconsäure, Citraconsäure, Mesaconsäure, N-Methacrylalanin, N-Acrylylhydroxyglycin, Sulfopropylacrylat, Sulfoethylacrylat, Sulfoethylmethacrylat, Styrolsulfonsäure, Vinylsulfonsäure, Vinylphosphonsäure, Phosphoethylacrylat, Phosphonoethylacrylat, Phosphopropylacrylat, Phosphonopropylacrylat, Phosphoethylmethacrylat, Phosphonoethylmethacrylat, Phosphopropylmethacrylat, Phosphonopropylmethacrylat und Alkalimetall- und Ammoniumsalzen dieser Verbindungen.

11. Verwendung nach einem der vorhergehenden Ansprüche, **dadurch gekennzeichnet, daß** das Monomer (c) ausgewählt ist aus Acrylamid, Vinylalkohol, $C_1$-$C_4$-Alkylestern der Acrylsäure und Methacrylsäure, $C_1$-$C_4$-Hydroxyalkylestern der Acrylsäure und Methacrylsäure, insbesondere Ethylenglykol- und Propylenglykolacrylat und -methacrylat, polyalkoxylierten Estern der Acrylsäure und Methacrylsäure, insbesondere Polyethylenglykol- und Polypropylenglykolestern, Estern von Acrylsäure oder Methacrylsäure und Polyethylenglykol- oder Polypropylenglykol-mono-$C_1$-$C_{25}$-alkylethern, Vinylacetat, Vinylpyrrolidon und Methylvinylether.

12. Verwendung nach einem der vorhergehenden Ansprüche, **dadurch gekennzeichnet, daß** in den allgemeinen Formeln I, II und/oder III X ausgewählt ist aus Anionen von Halogenen, insbesondere Chlor, Sulfonat, Sulfat, Hydrogensulfat, Phosphat, Phosphanat, Citrat, Formiat und Acetat.

13. Verwendung nach einem der vorhergehenden Ansprüche, **dadurch gekennzeichnet, daß** das wasserlösliche Copolymer erhalten wird durch Copolymerisation

- von 3 bis 80 Mol-%, vorzugsweise 10 bis 70 Mol-%, des Monomers (a),
- von 10 bis 95 Mol-%, vorzugsweise 20 bis 80 Mol-%, des Monomers (b),
- von 0 bis 50 Mol-%, vorzugsweise 5 bis 30 Mol-%, des Monomers (c),

wobei der Gehalt des gegebenenfalls vorhandenen Monomers (c) derart ist, daß das Polymer in dem wäßrigen Anwendungsmilieu löslich ist.

14. Verwendung nach einem der vorhergehenden Ansprüche, **dadurch gekennzeichnet, daß** das Molverhältnis von (a)/(b) 80/20 bis 5/95, vorzugsweise 75/25 bis 20/80, beträgt.

15. Verwendung nach einem der vorhergehenden Ansprüche, **dadurch gekennzeichnet, daß** die Molekularmasse des Copolymers mindestens 1.000, vorzugsweise mindestens 10.000 und höchstens 20.000.000, vorzugsweise höchstens 10.000.000, beträgt.

**16.** Verwendung nach Anspruch 1, **dadurch gekennzeichnet, daß** das Polymer ausgewählt ist aus den folgenden Verbindungen:

- Copolymeren von MAPTAC

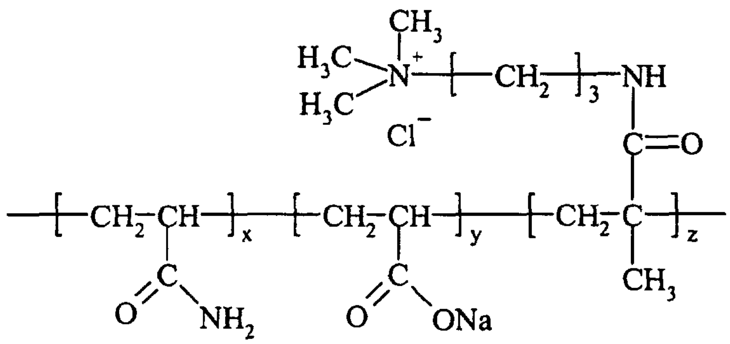

mit x+y+z = 100 %, wobei x, y und z die Mol-% jeder Einheit, die sich jeweils von den Monomeren (c), (b) und (a) ableitet, darstellen,
wobei y/z = 25/75 bis 70/30 beträgt und
x einen mittleren Wert von 0 bis 40 %, vorzugsweise 10 bis 30 %, aufweist, und homologen Copolymeren, bei denen das Monomer (b) Acrylsäure (Natriumsalz) und/oder (c) Acrylamid ersetzt ist durch ein unterschiedliches Monomer (b), das ausgewählt ist aus Maleinsäure, Vinylsulfonsäure, Styrolsulfonsäure (Natriumsalze), N-(1-Sulfo-2-isobutyl)acrylamid, und/oder ein verschiedenes Monomer (c), das ausgewählt ist aus Vinylalkohol und Hydroxyethylacrylat;

- Copolymeren von DADMAC, die zu dem vorangehenden Copolymeren von MAPTAC homolog sind, wobei das MAPTAC durch DADMAC ersetzt wird als Monomer (a);

- Copolymeren von DIQUAT

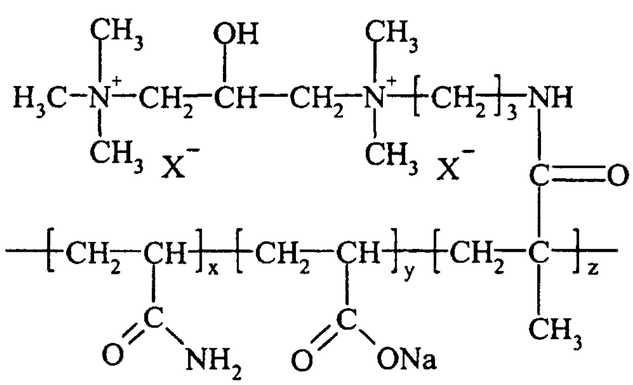

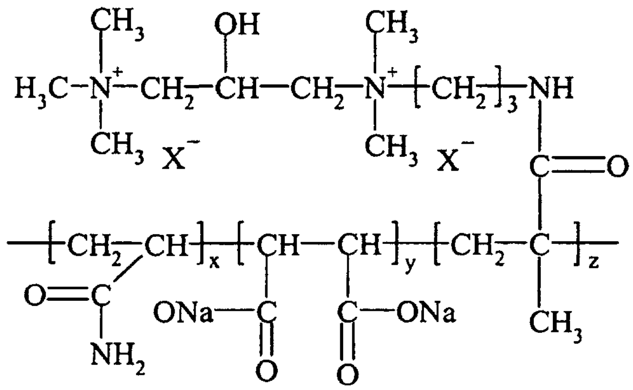

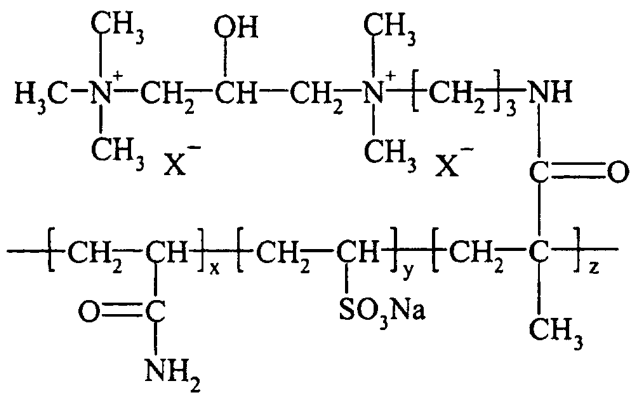

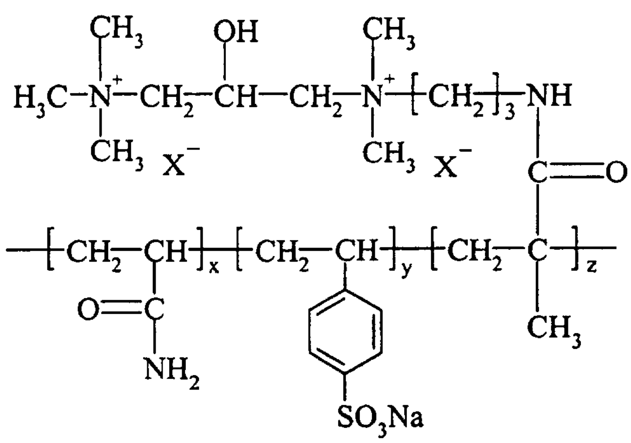

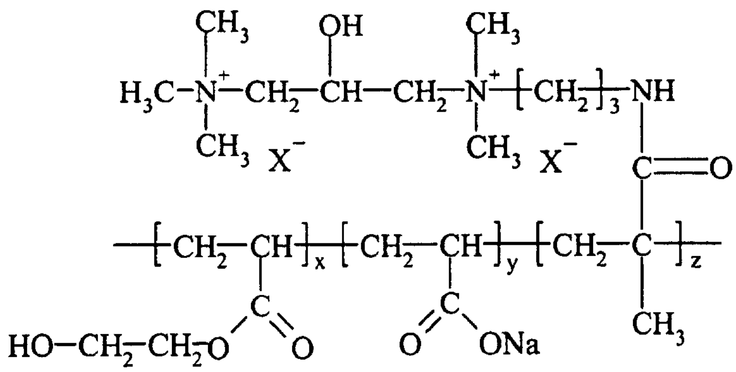

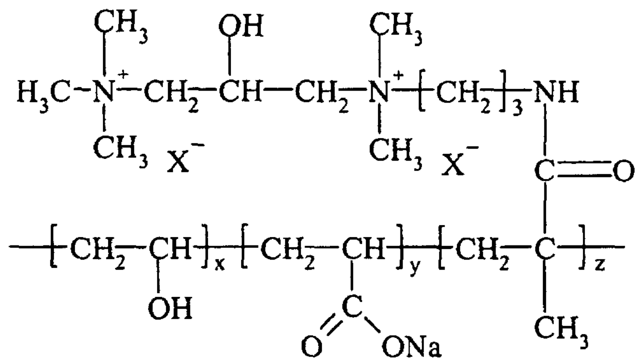

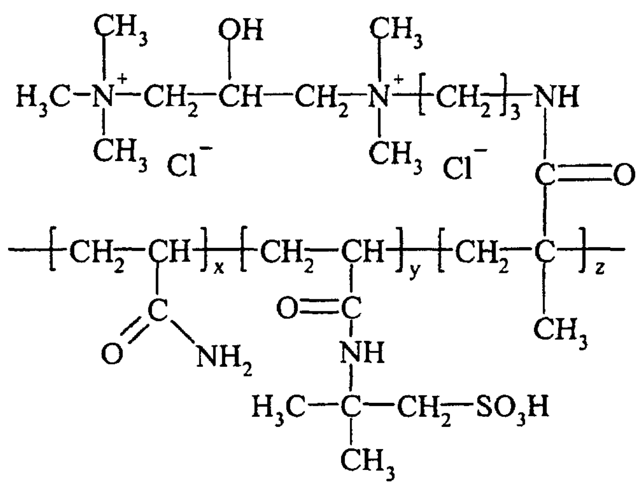

wobei:

x einen mittleren Wert von 0 bis 50 %, vorzugsweise 0 bis 30 %, insbesondere 5 bis 25 %, aufweist,

y einen mittleren Wert von 10 bis 95 %, vorzugsweise 20 bis 70 %, aufweist,

z einen mittleren Wert von 3 bis 80 %, vorzugsweise 10 bis 60 %, aufweist und

das Verhältnis y/z vorzugsweise in der Größenordnung von 4/1 bis 1/3 mit x+y+z = 100 % liegt, wobei x, y und z die Mol-% jeder Einheit, die sich jeweils von den Monomeren (c), (b) und (a) ableitet, darstellen.

**17.** Verwendung nach einem der vorhergehenden Ansprüche, **dadurch gekennzeichnet, daß** die kationische biozide Verbindung ausgewählt ist aus:

- quaternären Monoammoniumsalzen;
- monoquaternären heterocyclischen Aminsalzen;
- Alkyltriphenylphosphoniumsalzen;
- polymeren Bioziden.

**18.** Verwendung nach einem der vorhergehenden Ansprüche, **dadurch gekennzeichnet, daß** die biozide Zusammensetzung außerdem ein nichtionisches Tensid (oberflächenaktives Mittel) umfaßt.

**19.** Verwendung nach Anspruch 18, **dadurch gekennzeichnet, daß** die Zusammensetzung umfaßt:

- 0,1 bis 10 Gew.-%, vorzugsweise 0,3 bis 5 Gew.-%, eines kationischen Biozids;
- 0,01 bis 3 Gew.-%, vorzugsweise 0,05 bis 2 Gew.-%, eines wasserlöslichen Polymers, wie in den Ansprüchen 1 bis 16 definiert;
- 0,5 bis 15 Gew.-%, vorzugsweise 1 bis 10 Gew.-%, eines nichtionischen Tensids.

**20.** Verwendung nach einem der Ansprüche 1 bis 19 für die biozide Behandlung von harten Oberflächen.

**21.** Verwendung des wasserlöslichen Polymers, wie in den Ansprüchen 1 bis 16 definiert, als Mittel zur Vektorisierung und/oder kontrollierten Freisetzung des Biozids auf der zu behandelnden harten Oberfläche in einer wäßrigen Biozidzusammensetzung, die ein kationisches Biozid zur Behandlung harter Oberflächen aufweist.

## Claims

**1.** Use of at least one water-soluble polymer, obtained by copolymerization:

- of at least one monomer (a) with ethylenic unsaturation having a group capable of being protonated in the application medium with
- at least one monomer with ethylenic unsaturation (b) which is copolymerizable with (a) carrying a functional group with an acidic nature capable of being negatively ionized in the application medium; and
- optionally at least one monomer with ethylenic unsaturation (c) with a neutral charge, preferably carrying one or more hydrophilic groups, which is copolymerizable with (a) and (b) ;

for improving the biocidal effectiveness of aqueous biocidal compositions comprising a cationic biocidal compound.

**2.** Use according to claim 1, **characterized in that** the monomer (a) comprises at least one quaternary ammonium group .

**3.** Use according to claim 1 or claim 2, in which the monomer (a) is chosen from the compounds of following general formulae I, II and III:

*formula I:*

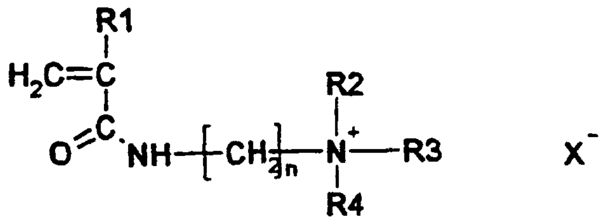

in which

- $R_1$ is a hydrogen atom or a methyl group, preferably a methyl group;
- $R_2$, $R_3$ and $R_4$ are linear or branched $C_1$-$C_4$ alkyl groups;
- n represents an integer from 1 to 4, in particular the number 3;
- X represents a counterion compatible with the water-soluble nature of the polymer;

*formula II:*

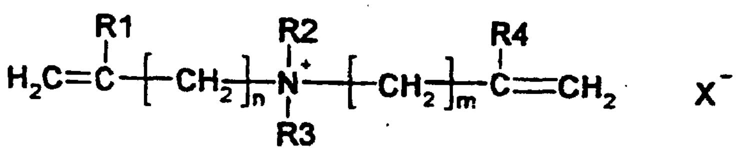

in which:

- $R_1$ and $R_4$ represent, independently of one another, a hydrogen atom or a linear or branched $C_1$-$C_6$ alkyl group;
- $R_2$ and $R_3$ represent, independently of one another, an alkyl, hydroxyalkyl or aminoalkyl group in which the alkyl group is a linear or branched $C_1$-$C_6$ chain, preferably a methyl group;
- n and m are integers between 1 and 3;
- X represents a counterion compatible with the water-soluble nature of the polymer;

*formula III:*

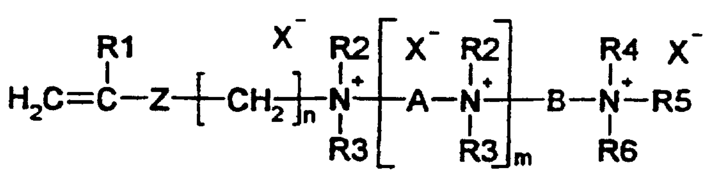

in which

- $R_1$ is a hydrogen atom or a methyl or ethyl group;
- $R_2$, $R_3$, $R_4$, $R_5$ and $R_6$, which are identical or different, are linear or branched $C_1$-$C_6$, preferably $C_1$-$C_4$, alkyl, hydroxyalkyl or aminoalkyl groups;

- m is an integer from 0 to 10, preferably from 0 to 2;

- n is an integer from 1 to 6, preferably 2 to 4;

- Z represents a -C(O)O- or -C(O)NH- group or an oxygen atom;

- A represents a $(CH_2)_p$ group, p being an integer from 1 to 6, preferably from 2 to 4;

- B represents a linear or branched $C_2$-$C_{12}$, advantageously $C_3$-$C_6$, polymethylene chain optionally interrupted by one or more heteroatoms or heterogroups, in particular O or NH, and optionally substituted by one or more hydroxyl or amino groups, preferably hydroxyl groups;

- X, which are identical or different, represent counterions compatible with the water-soluble nature of the polymer.

**4.** Use according to claim 3, **characterized in that** the monomer (a) is represented by the following formula:

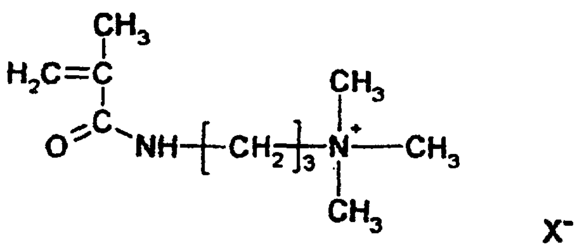

X- being as defined in claim 3, preferably a chloride (MAPTAC).

**5.** Use according to claim 3, **characterized in that** the monomer (a) is represented by the following formula:

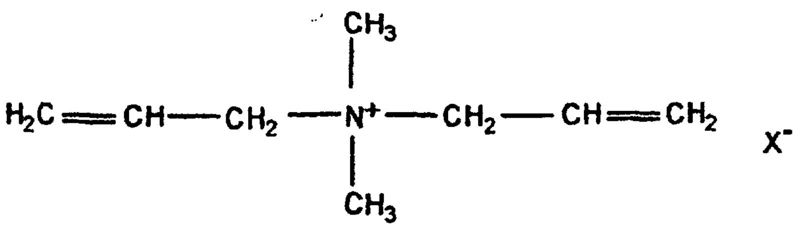

$X^-$ being as defined in claim 3, preferably a chloride (DADMAC).

**6.** Use according to claim 3, **characterized in that** the monomer (a) is represented by the general formula III according to claim 5, in which

- Z represents C(O)O, C(O)NH or O, very preferably C(O)NH;

- n is equal to 2 or 3, very particularly 3;

- m ranges from 0 to 2 and is preferably equal to 0 or 1, very particularly to 0;

- B represents

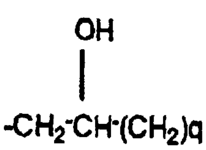

with q from 1 to 4, preferably equal to 1;

- $R_1$ to $R_6$, which are identical or different, represent a methyl or ethyl group.

**7.** Use according to claim 6, **characterized in that** the monomer (a) is represented by the following formula:

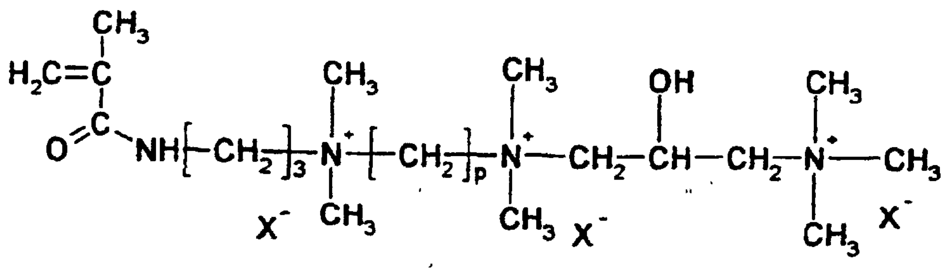

p = 2 to 4.

**8.** Use according to claim 7, **characterized in that** the monomer (a) is:

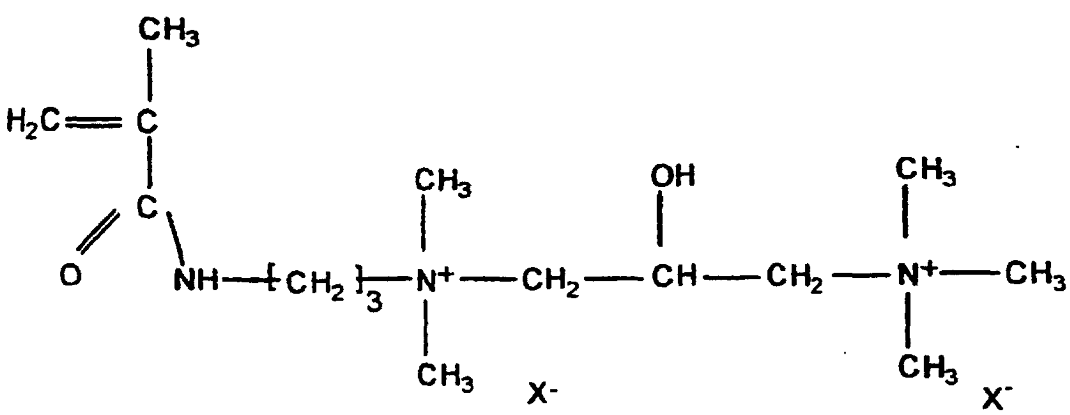

X- representing the chloride ion (Diquat).

**9.** Use according to any one of the preceding claims, 9. **characterized in that** (b) is chosen from $C_3$-$C_8$ carboxylic, sulphonic, sulphuric, phosphonic and phosphoric acids with monoethylenic unsaturation.

**10.** Use according to claim 9, **characterized in that** the monomer (b) is chosen from acrylic acid, methacrylic acid, α-ethacrylic acid, β,β-dimethylacrylic acid, methylenemalonic acid, vinylacetic acid, allylacetic acid, ethylideneacetic acid, propylideneacetic acid, crotonic acid, maleic acid, fumaric acid, itaconic acid, citraconic acid, mesaconic acid, N-(methacryloyl)alanine, N-(acryloyl)hydroxyglycine, sulphopropyl acrylate, sulphoethyl acrylate, sulphoethyl methacrylate, styrenesulphonic acid, vinylsulphonic acid, vinylphosphonic acid, phosphoethyl acrylate, phosphonoethyl acrylate, phosphopropyl acrylate, phosphonopropyl acrylate, phosphoethyl methacrylate, phosphonoethyl methacrylate, phosphopropyl methacrylate, phosphonopropyl methacrylate and the alkali metal and ammonium salts of the latter.

**11.** Use according to any one of the preceding claims, **characterized in that** the monomer (c) is chosen from acrylamide, vinyl alcohol, $C_1$-$C_4$ alkyl esters of acrylic acid and of methacrylic acid, $C_1$-$C_4$ hydroxyalkyl esters of acrylic acid and of methacrylic acid, in particular ethylene glycol and propylene glycol acrylate and methacrylate, polyalkoxylated esters of acrylic acid and of methacrylic acid, in particular the polyethylene glycol and polypropylene glycol esters, esters of acrylic acid or of methacrylic acid and of polyethylene glycol or polypropylene glycol $C_1$-$C_{25}$ monoalkyl ethers, vinyl acetate, vinylpyrrolidone or methyl vinyl ether.

**12.** Use according to any one of the preceding claims, **characterized in that**, in the general formulae I, II and/or III,

X is chosen from halogen, in particular chlorine, sulphonate, sulphate, hydrogensulphate, phosphate, phosphonate, citrate, formate and acetate anions.

**13.** Use according to any one of the preceding claims, **characterized in that** the water-soluble copolymer is obtained by copolymerization:

- of 3 to 80 mol%, preferably 10 to 70 mol%, of the monomer (a);
- of 10 to 95 mol%, preferably 20 to 80 mol%, of the monomer (b);
- of 0 to 50 mol%, preferably of 5 to 30 mol%, of the monomer (c);
- the level of optional monomer (c) being such that the polymer is soluble in the aqueous application medium.

**14.** Use according to any one of the preceding claims, **characterized in that** the (a)/(b) molar ratio is between 80/20 and 5/95 and preferably between 75/25 and 20/80.

**15.** Use according to any one of the preceding claims, **characterized in that** the molecular mass of the copolymer is at least 1000, advantageously at least 10 000, and at most 20 000 000, advantageously at most 10 000 000.

**16.** Use according to claim 1, **characterized in that** the polymer is chosen from the following compounds:

* MAPTAC copolymers

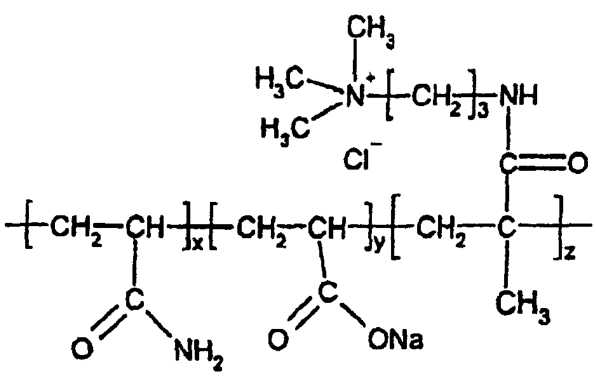

with x + y + z = 100%, x, y and z representing the mol% of each unit derived from each of the monomers (c), (b) and (a)
y/z = 25/75 to 70/30
and x having a mean value of 0 to 40%, preferably of 10 to 30%,
and homologous copolymers in which the monomer (b), acrylic acid (sodium salt), and/or (c), acrylamide, is replaced by a different monomer (b) chosen from maleic acid, vinylsulphonic acid, styrenesulphonic acid (sodium salts) or N-(1-sulpho-2-isobutyl)acrylamide and/or a different monomer (c) chosen from vinyl alcohol or hydroxyethyl acrylate

* DADMAC copolymers homologous with the preceding MAPTAC copolymers, in which the MAPTAC is replaced by DADMAC as monomer (a)
* Diquat copolymers

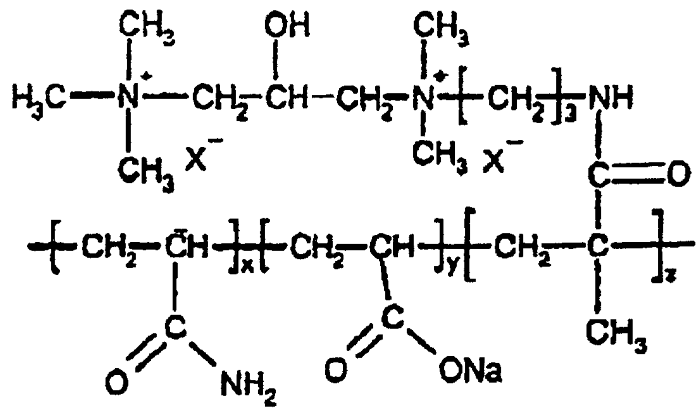

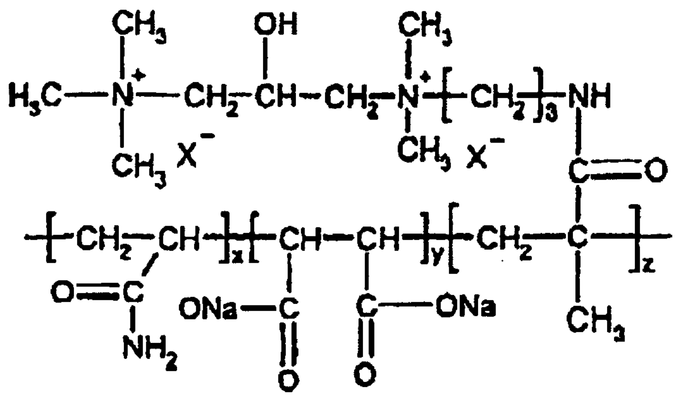

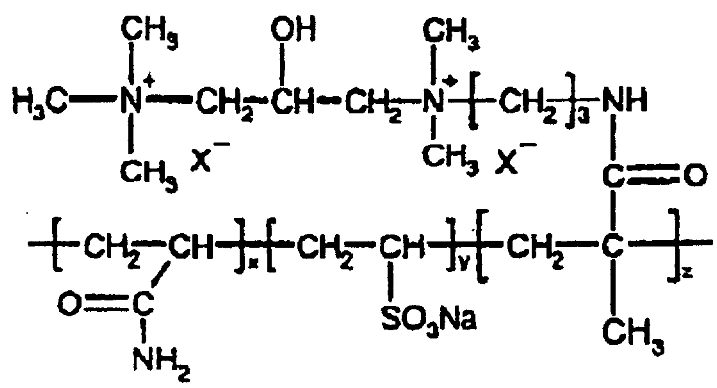

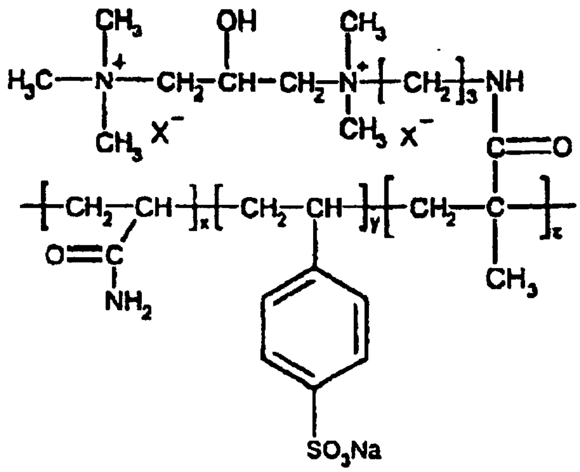

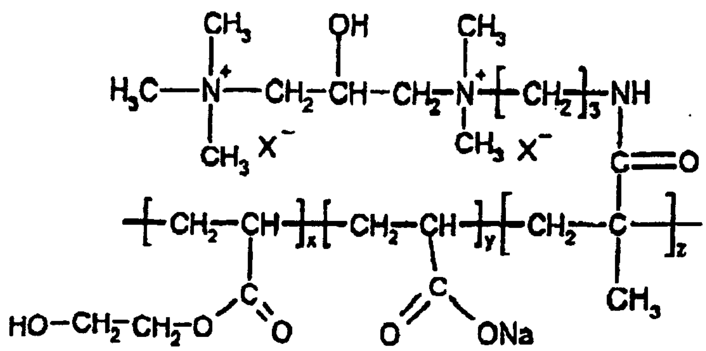

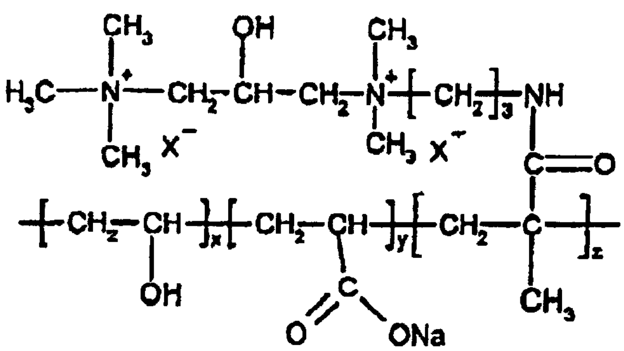

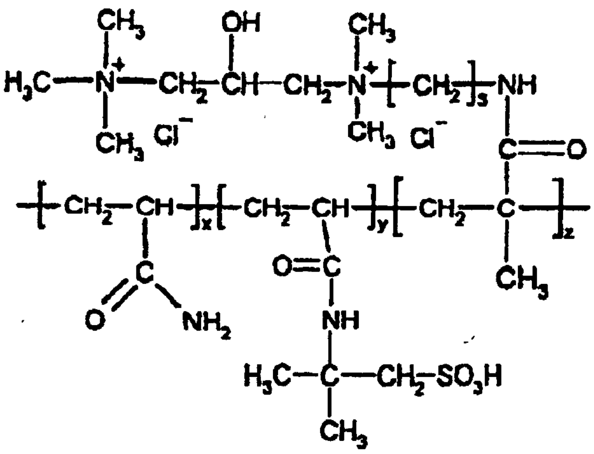

with
x having a mean value of 0 to 50%, preferably of 0 to 30%, very particularly of 5 to 25%,
y having a mean value of 10 to 95%, preferably of 20 to 70%,
z having a mean value of 3 to 80%, preferably of 10 to 60%,
and the y/z ratio preferably being of the order of 4/1 to 1/3,
with x + y + z = 100%, x, y and z representing the mol% of each unit derived from each of the monomers (c), (b) and (a).

**17.** Use according to any one of the preceding claims, **characterized in that** the cationic biocidal compound is chosen from:

- quaternary monoammonium salts;
- monoquaternary heterocyclic amine salts;
- alkyltriphenylphosphonium salts;
- polymeric biocides.

**18.** Use according to any one of the preceding claims, **characterized in that** the said biocidal composition additionally comprises a nonionic surface-active agent.

**19.** Use according to claim 18, **characterized in that** the composition comprises:

- from 0.1 to 10%, preferably from 0.3 to 5%, by weight of a cationic biocide;
- from 0.01 to 3%, preferably 0.05 to 2%, by weight of a water-soluble polymer as defined in claims 1 to 16;
- from 0.5 to 15%, preferably from 1 to 10%, by weight of a nonionic surfactant.

**20.** Use according to any one of claims 1 to 19, for the biocidal treatment of hard surfaces.

**21.** Use, in an aqueous biocidal composition comprising a cationic biocide for the treatment of hard surfaces, of the water-soluble polymer as defined in claims 1 to 16 as agent for the vectorization and/or the controlled release of the said biocide on the hard surface to be treated.